# EUROPÄISCHE PATENTANMELDUNG

(11) **EP 3 050 919 A1**
(43) Veröffentlichungstag der Anmeldung: **03.08.2016**
(21) Anmeldenummer: 15153084.7
(22) Anmeldetag: 29.01.2015
(51) Int. Cl.: C08K 5/205, C08L 61/24, C08L 97/02

(54) **LIGNOCELLULOSEHALTIGE MATERIALEN ENTHALTEND MISCHUNGEN MIT SALZEN VON N-SUBSTITUIERTEN CARBAMIDSÄUREN**

(71) Anmelder: BASF SE, 67056 Ludwigshafen am Rhein (DE)
(72) Erfinder: Assmann, Jens, 67435 Neustadt (DE); Reuter, Frank, 55278 Undenheim (DE); Lindner, Jean-Pierre Berkan, 68165 Mannheim (DE); Nesvadba, Peter, 1723 Marly (CH)
(74) Vertreter: BASF IP Association

(57) **Zusammenfassung**

Die vorliegende Erfindung betrifft lignocellulosehaltige Materialen, die
a) 30 bis 99,9999 Gew.-%, bevorzugt 40 bis 99,999 Gew.-%, besonders bevorzugt 50 bis 99,99 Gew.-% lignocellulosehaltiges Material (Komponente A) und
b) 0,0001 bis 10 Gew.-%, bevorzugt 0,001 bis 8 Gew.-%, besonders bevorzugt 0,01 bis 4 Gew.-% Salze von N-substituierten Carbamidsäuren (Komponente B)

enthalten.

## Beschreibung

Die vorliegende Erfindung betrifft lignocellulosehaltige Materialen enthaltend Mischungen mit Salzen von N-substituierten Carbamidsäuren.

Aus der EP-A-13 372 sind Mischungen enthaltend Holz, Aminoplastleime (Melamin-Formaldehyd-, Harnstoff-Formaldehyd-Kondensate) und unsubstituiertes Ammoniumcarbaminat (also Ammoniumcarbamat) zur Herstellung von Holzwerkstoffplatten bekannt. Die so hergestellten Holzwerkstoffplatten haben den Nachteil, dass sich das Ammoniumcarbamat bei den Temperaturen des Herstellprozesses zersetzt und z.B. Ammonik als giftige Dämpfe an die Umgebung abgibt.

Aus der DE-A-195 22 951 sind Mischungen enthaltend Holz, Aminoplastleime und Carbamate mit freien Amidfunktionen zur Herstellung von Holzwerkstoffe bekannt, wobei es sich jedoch - wie aus EP-A-341 569 hervorgeht- um Verbindungen der Formel RNHCH₂O-CONH₂, also um Carbamidsäureester handelt und die mit Aminoplastleimen und feinteiligem Feststoff aus einem als "Carbamat mit freien Amidfunktionen" bezeichneten Stoff hergestellt werden, wobei sich der Feststoff nicht vorzeitig in der Harzlösung auflöst oder chemisch zersetzt, was zu einer unhomogenen Verteilung des als "Carbamat" bezeichneten Stoffs im Holzwerkstoff führt. Damit wird zwar eine gewisse, aber unbefriedigende Reduzierung der Formaldehydemission erreicht.

In der vorliegenden Erfindung werden unter dem Begriff "Carbamidsäure(n)" Verbindungen der Formel R¹R²N-COOH (Verbindungen der nachfolgend beschriebenen allgemeinen Formel I), unter dem Begriff "Carbamat(e)" "Salze von N-substituierten Carbamidsäuren" verstanden.

Der vorliegenden Erfindung lag daher die Aufgabe zugrunde, den zuvor genannten Nachteilen abzuhelfen.

Demgemäß wurden neue lignocellulosehaltige Materialen gefunden, welche dadurch gekennzeichnet sind, dass sie
a) 30 bis 99,9999 Gew.-%, bevorzugt 40 bis 99,999 Gew.-%, besonders bevorzugt 50 bis 99,99 Gew.-% lignocellulosebasiertes Material (Komponente A),
b) 0,0001 bis 10 Gew.-%, bevorzugt 0,001 bis 8 Gew.-%, besonders bevorzugt 0,01 bis 4 Gew.-% Salze von N-substituierten Carbamidsäuren (Komponente B) und
c) 0 bis 40 Gew.-%, bevorzugt 0 bis 30 Gew.-%, besonders bevorzugt 0 bis 15 Gew.-% eines Bindemittels(Komponente C),
d) 0 bis 20 Gew.-%, bevorzugt 0 bis 15 Gew.-%, besonders bevorzugt 0 bis 10 Gew.-% mikrofibrillierte Cellulose (Komponente D),
e) 0 bis 20 Gew.-%, bevorzugt 0 bis 15 Gew.-%, besonders bevorzugt 0 bis 10 Gew.-% Hydrophobierungsmittel (Komponente E),
f) 0 bis 20 Gew.-%, bevorzugt 0 bis 15 Gew.-%, besonders bevorzugt 0 bis 10 Gew.-% Effektstoffe sowie Agenzien zu deren Dispergierung (Komponente F),
g) 0 bis 20 Gew.-%, bevorzugt 0 bis 15 Gew.-%, besonders bevorzugt 0 bis 10 Gew.-% Füllstoffe sowie Agenzien zu deren Dispergierung (Komponente G),
h) 0 bis 20 Gew.-%, bevorzugt 0 bis 15 Gew.-%, besonders bevorzugt 0 bis 10 Gew.-% Formaldehydfänger (Komponente H),
i) 0 bis 20 Gew.-%, bevorzugt 0 bis 15 Gew.-%, besonders bevorzugt 0 bis 10 Gew.-% Härter (Komponente I),
j) 0 bis 5 Gew.-%, bevorzugt 0 bis 2 Gew.-%, besonders bevorzugt 0 bis 1 Gew.-% Fluoreszenzfarbstoff (Komponente J),
k) 0 bis 20 Gew.-%, bevorzugt 0 bis 15 Gew.-%, besonders bevorzugt 0 bis 10 Gew.-% weitere Bestandteile (Komponente K) und
l) 0 bis 30 Gew.%, bevorzugt 0 bis 20 Gew.-%, besonders bevorzugt 0 bis 10 Gew.-% Wasser (Komponente L)
   enthalten
   sowie neue Holzwerkstoffe, hergestellt unter Verwendung von 0,0001 bis 10 Gew.-%, bevorzugt 0,001 bis 8 Gew.-%, besonders bevorzugt 0,01 bis 4 Gew.-% Salze von N-substituierten Carbamidsäuren (Komponente B), neue Holzwerkstoffe enthaltend die Komponenten A und C bis L in den zuvor beschriebenen Mengen, welche dadurch gekennzeichnet sind, dass sie 0,0001 bis 8 Gew.-%, bevorzugt 0,0001 bis 5 Gew.-%, besonders bevorzugt 0,0001 bis 3 Gew.-% Salze von N-substituierten Carbamidsäuren (Komponente B) enthalten, sowie Verfahren zur Herstellung von Holzwerkstoffen, sowie neue Mischungen aus Salzen von N-substituierten Carbamidsäuren mit Bindemitteln sowie die Verwendung dieser neuen Mischungen zur Herstellung von Holzwerkstoffen.

Lignocellulosehaltige Materialen enthaltend Mischungen mit Salzen von N-substituierten Carbamidsäuren können wie folgt erhalten werden:
I) Lignocellulosebasierte Partikel (Komponente A) können zusammen mit den (festen oder flüssigen) Carbamaten (Komponente B) und evtl. weiteren festen Bestandteilen der Komponenten D bis L gemischt und mit Bindemittel (Komponente C), welches gegebenenfalls auch weitere Bestandteile der Komponenten D bis L enthalten kann, besprüht werden,
II) Das Carbamat (Komponente B) kann mit dem Bindemittel (Komponente C) und gegebenenfalls weiteren Komponenten D bis L gemischt und diese Mischung auf die lignocellulosebasierten Partikel (Komponente A), z.B. durch Besprühen, Bestreichen oder Imprägnierung unter erhöhtem Druck bei Drücken von 1,1 bis 10 bar, bevorzugt von 1,1 bis 5 bar, bei Normaldruck (Atmosphärendruck) oder im Vakuum bei Drücken von 0,001 bis 0,95 bar, bevorzugt von 0,01 bis 0,9 bar, besonders bevorzugt bei Normaldruck (Atmosphärendruck) aufgebracht werden,
III) Das Carbamat (Komponente B) kann nach dem Mischen von lignocellulosebasiertem Material (Komponente A) und Bindemittel (Komponente C) vor dem Fertigungsschritt des Werkstücks, z.B. durch Heißpressen, als Reinstoff oder als Lösung, welche gegebenenfalls auch weitere Komponenten D bis L enthalten kann, z.B. in einem weiteren Sprühschritt, zugegeben werden, oder
IV) Lignocellulosebasiertes Material, in Form von Werkstücken aus Massivholz, kann mit Carbamat-Lösung der Komponente B, welche auch weitere Bestandteile D bis L enthalten kann, besprüht, bestrichen oder durch Hochdruck bei Drücken von 1 bis 100 bar, bevorzugt von 2 bis 50 bar, besonders bevorzugt von 5 bis 20 bar, Normaldruck (Atmosphärendruck) oder im Vakuum bei Drücken von 0,001 0,95 bar, bevorzugt von 0,01 0,9 bar, besonders bevorzugt bei Normaldruck (Atmosphärendruck)imprägniert werden.

Für den Fall, dass lignocellulosehaltige Partikel zu Holzwerkstoffen (u.a. zu fertigen Werkstücken) verarbeitet werden, ist in der Regel ein Bindemittel in ausreichender Menge erforderlich.

Die erfindungsgemäßen Mischungen können wie folgt hergestellt werden:
Die Komponente B) und die Komponente C) können in beliebiger Reihenfolge zusammengefügt werden. In einer bevorzugten Ausführungsform kann die Komponente C) vorgelegt und die Komponente B) und ggf. weitere Bestandteile (Komponenten D bis L) ggf. unter Zuhilfenahme einer Rührapparatur eingerührt werden. Die Mischtemperaturen und Mischzeiten werden in der Regel so gewählt, dass die Bestandteile bestmöglich vermischt/verteilt sind. Die Mischungstemperaturen liegen in der Regel zwischen 5 und 90°C, bevorzugt 10 und 60°C, besonders bevorzugt 20 und 50°C, insbesondere bei Raumtemperatur (Umgebungstemperatur). Die Mischzeiten liegen in Abhängigkeit von Anzahl und Menge der Bestandteile in der Regel zwischen 5 Sekunden und 60 Stunden, bevorzugt zwischen 1 Minute und 24 Stunden, besonders bevorzugt zwischen 10 Minuten und 10 Stunden.

Die erfindungsgemäßen neuen Mischungen enthalten, bevorzugt bestehen aus ein oder mehrere Substanzen der Komponenten
A. 0,0025 bis 25 Gew.-%, bevorzugt 0,025 bis 20 Gew.-%, besonders bevorzugt 0,25 bis 10 Gew.-% Salzen von N-substituierten Carbamidsäuren (Komponente B),
B. 99,9975 bis 20 Gew.-%, bevorzugt 99,975 bis 40 Gew.-%, besonders bevorzugt 99,75 bis 50 Gew.-% Melamin-Formaldehyd-, Harnstoff-Formaldehyd- oder Phenol-Formaldehyd-Kondensate oder deren Mischungen (Komponente C),
C. 0 bis 50 Gew.-%, bevorzugt 0 bis 37,5 Gew.-%, besonders bevorzugt 0 bis 25 Gew.-% mikrofibrillierte Cellulose (Komponente D),
D. 0 bis 50 Gew.-%, bevorzugt 0 bis 37,5 Gew.-%, besonders bevorzugt 0 bis 25 Gew.-% Hydrophobierungsmittel (Komponente E),
E. 0 bis 50 Gew.-%, bevorzugt 0 bis 37,5 Gew.-%, besonders bevorzugt 0 bis 25 Gew.-% Effektstoffe sowie Agenzien zu deren Dispergierung (Komponente F),
F. 0 bis 50 Gew.-%, bevorzugt 0 bis 37,5 Gew.-%, besonders bevorzugt 0 bis 25 Gew.-% Füllstoffe sowie Agenzien zu deren Dispergierung (Komponente G),
G. 0 bis 50 Gew.-%, bevorzugt 0 bis 37,5 Gew.-%, besonders bevorzugt 0 bis 25 Gew.-% Formaldehydfänger (Komponente H),
H. 0 bis 50 Gew.-%, bevorzugt 0 bis 37,5 Gew.-%, besonders bevorzugt 0 bis 25 Gew.-% Härter (Komponente I),
I. 0 bis 12,5 Gew.-%, bevorzugt 0 bis 5 Gew.-%, besonders bevorzugt 0 bis 2,5 Gew.-% Fluoreszenzfarbstoff (Komponente J),
J. 0 bis 50 Gew.-%, bevorzugt 0 bis 37,5 Gew.-%, besonders bevorzugt 0 bis 25 Gew.-% weitere Bestandteile (Komponente K) und
K. 0 bis 75 Gew.-%, bevorzugt 0 bis 50 Gew.-%, besonders bevorzugt 0 bis 25 Gew.-% Wasser (Komponente L).

Unter lignocellulosehaltigem Material wird erfindungsgemäß lignocellulosebasiertes Material (Komponte A) verstanden, das mit 0,0001 bis 10 Gew.-%, bevorzugt 0,001 bis 8 Gew.-%, besonders bevorzugt 0,01 bis 4 Gew.-% Salzen von N-substituierten Carbamidsäuren (Komponente B) und gegebenenfalls weiteren Komponenten C bis L beaufschlagt ist.

Für den Fall, dass es sich bei dem lignocellulosebasierten Material um Massivholz handelt, enthalten die lignocellulosehaltigen Materialien
a. 80 bis 99,9999 Gew.-%, bevorzugt 90 bis 99,999 Gew.-%, besonders bevorzugt 95 bis 99,99 Gew.-% lignocellulosebasiertes Material (Komponente A),
b. 0,0001 bis 20Gew.-%, bevorzugt 0,001 bis 10 Gew.-%, besonders bevorzugt 0,01 bis 5 Gew.-% Salze von N-substituierten Carbamidsäuren (Komponente B) und
c. 0 bis 10 Gew.-%, bevorzugt 0 bis 5 Gew.-%, eines Bindemittels(Komponente C),
d. 0 bis 5 Gew.-%, bevorzugt 0 bis 2 Gew.-% mikrofibrillierte Cellulose (Komponente D),
e. 0 bis 5 Gew.-%, bevorzugt 0 bis 2 Gew.-% Hydrophobierungsmittel (Komponente E),
f. 0 bis 5 Gew.-%, bevorzugt 0 bis 2 Gew.-% Effektstoffe sowie Agenzien zu deren Dispergierung (Komponente F),
g. 0 bis 5 Gew.-%, bevorzugt 0 bis 2 Gew.-% Füllstoffe sowie Agenzien zu deren Dispergierung (Komponente G),
h. 0 bis 5 Gew.-%, bevorzugt 0 bis 2 Gew.-% Formaldehydfänger (Komponente H),
i. 0 bis 5 Gew.-%, bevorzugt 0 bis 2 Gew.-% Härter (Komponente I),
j. 0 bis 1 Gew.-%, bevorzugt 0 bis 0,5 Gew.-% Fluoreszenzfarbstoff (Komponente J),
k. 0 bis 5 Gew.-%, bevorzugt 0 bis 2 Gew.-% weitere Bestandteile (Komponente K) und
l. 0 bis 20 Gew.-%, bevorzugt 0 bis15 Gew.-% Wasser (Komponente L).

### Komponente A): lignocellulosebasiertes Material

Als lignocellulosebasiertes Material eignen sich
- Massivholz beispielsweise in Form von Blöcken, Brettern, Panelen, Sparren oder Dielen oder
- Partikel beispielsweise als Sägespäne, Holzspäne, Hobelspäne, gegebenenfalls zerkleinertes Getreidestroh, Schäben, Baumwollstängel, Strands, Waver, Fasern (Holzfasern, Cellulosefasern, Hanffasern, Baumwollfasern, Bambusfasern, Miscanthus, Bagasse oder deren Gemische, bevorzugt Holzfasern, Hanffasern, Bambusfasern, Miscanthus, Bagasse (Zuckerrohr) oder deren Gemische, besonders bevorzugt Strands, Fasern, Sägespäne, Hobelspäne, Holzspäne oder deren Gemische.

Als lignocellulosebasierte Materialien gelten grundsätzlich alle Holzsorten, vorzugsweise solche, die wenigstens 30 Gew.-%, insbesondere wenigstens 50 Gew.-% ihres Trockengewichts an Wasser aufnehmen können, und besonders bevorzugt solche, die in die Tränkbarkeitsklassen 1 und 2 gemäß DIN EN 350-2 eingeordnet werden. Hierzu zählen beispielsweise Hölzer von Nadelbäumen wie Kiefer (Pinus spp.), Fichte, Douglasie, Lärche, Pinie, Tanne, Küstentanne, Zeder und Zirbel, sowie Hölzer von Laubbäumen, z. B. Ahorn, Hardmaple, Akazie, Ayons, Birke, Birne, Buche, Eiche, Erle, Espe, Esche, Elsbeere, Hasel, Hainbuche, Kirsche, Kastanie, Linde, amerikanischer Nussbaum, Pappel, Olive, Robinie, Ulme, Walnuss, Gummibaum, Zebrano, Weide, Zerreiche und dergleichen. Auch weitere lignocellulosehaltige Naturfaserstoffe wie Bambus, Bargasse, Baumwollstängel, Jute, Sisal, Stroh, Flachs, Kokosfasern, Bananenfasern, Schilf, Ramie, Hanf, Alfagras, Reisschalen und Kork. Da durch die Imprägnierung auch bei preiswerten Hölzern Eigenschaften erzielt werden, wie sie sonst nur Tropenhölzer aufweisen, beispielsweise ein äußerst geringes Quell-/Schwind-Verhalten, hohe Festigkeiten und gute Witterungsbeständigkeit, betrifft eine besondere Ausführungsform der Erfindung die Verwendung von modifiziertem Holz bzw. Holzmaterial, dessen Holzbestandteil ausgewählt ist unter Buche, Fichte, Kiefer, Birke, Pappel, Esche und Ahorn, bevorzugt Fichte, Kiefer, Douglasie, Pappel, Birke, Esche, Ahorn, Eiche und Buche.

Die lignocellulosehaltige Werkstoffe können in beliebige Formen gepresst werden, bevorzugt sind OSB (oriented structural board) Platten, Spanplatten, Wafer-Boards, OSL-Platten oder OSL-Formteilen (Oriented-Strand-Lumber), PSL-Platten oder PSL-Formteilen (Parallel-Strand-Lumber), Platten oder Formteilen aus Constructed Strand Lumber, SCL-Formteilen oder-Platten (Structural Composite Lumber), LSL-Formteilen oder -Platten (Laminated Strand Lumber), Dämmplatten und mitteldichten (MDF) und hochdichten (HDF) Faserplatten und dergleichen, Sperrholz, Leimholz, Lagenholz, Furnierschichtholz (z.B. Kerto-Schichtholz), Multiplex-Platten, laminierten Furnierwerkstoffe (Laminated Veneer Lumber LVL), Lagenholzformteile, Sperrholzformteile und andere beliebige mit wenigstens einer Furnierlage beschichtete Formteile, bevorzugt sind Spanplatten, Furniere, OSB-Platten, Faserplatten, besonders bevorzugt Span- oder Faserplatten.

Ferner können lignocellulosehaltige Werkstoffe ein- oder mehrschichtige lignocellulosehaltige Werkstoffe (Schichtplatten) sein. Bevorzugt sind mindestens dreischichtige Platten, wobei entweder nur die mittlere Schicht oder mindestens ein Teil der mittleren Schichten einen lignocellulosehaltigen Werkstoff wie oben beschrieben enthält oder außer der mittlere Schicht oder mindestens einem Teil der mittleren Schichten mindestens eine weitere Schicht einen lignocellulosehaltigen Werkstoff wie oben beschrieben enthält, wobei man in der Regel die Komponenten für die einzelnen Schichten übereinanderschichtet und unter erhöhter Temperatur und erhöhtem Druck verpresst.

Die mittlere Dichte des mehrschichtigen, vorzugsweise des dreischichtigen lignocellulosehaltigen Werkstoffes, vorzugsweise Holzwerkstoffs ist in der Regel nicht kritisch.

Üblicherweise haben höherdichte mehrschichtige, vorzugsweise dreischichtige lignocellulosehaltige Werkstoffe, vorzugsweise Holzwerkstoffe eine mittlere Dichte im Bereich von mindestens 600 bis 900 kg/m³, bevorzugt 600 bis 850 kg/m³, besonders bevorzugt 600 bis 800 kg/m³.

Üblicherweise haben niedrigdichte mehrschichtige, vorzugsweise dreischichtige lignocellulosehaltige Werkstoffe, vorzugsweise Holzwerkstoffe eine mittlere Dichte im Bereich von 200 bis 600 kg/m³, bevorzugt 300 bis 600 kg/m³, besonders bevorzugt 350 bis 500 kg/m³.

Bevorzugt enthält der mehrschichtige lignocellulosehaltige Werkstoff, vorzugsweise mehrschichtige Holzwerkstoff drei Lignocelluloseschichten, vorzugsweise Holzstoffschichten, wobei die äußeren Deckschichten in Summe in der Regel dünner sind als die innere(n) Schicht(en).

Die Dicke des mehrschichtigen lignocellulosehaltigen Werkstoffes, vorzugsweise mehrschichtigen Holzwerkstoffs variiert mit dem Anwendungsgebiet und liegt in der Regel im Bereich von 0,5 bis 100 mm, vorzugsweise im Bereich von 10 bis 40 mm, insbesondere 12 bis 40 mm.

Das für die Schichten verwendete Bindemittel ist üblicherweise ein Aminoplastharz, beispielsweise Harnstoff-Formaldehydharz (UF), Melamin-Formaldehydharz (MF), Melamin-Harnstoff-Formaldehydharz (MUF), organische Isocyanate oder die erfindungsgemäßen neuen Mischungen. Vorzugsweise ist das für die äußeren Schichten verwendete Bindemittel ein Aminoplastharz, besonders bevorzugt ein Harnstoff-Formaldehydharz, ganz besonders bevorzugt ein Aminoplastharz worin das molare Formaldehyd zu -NH₂-Gruppen-Verhältnis im Bereich von 0,3:1 bis 3:1 liegt.

Mittlere Schichten im Sinne der Erfindung sind alle Schichten, die nicht die äußeren Schichten sind.

Die Verfahren zur Herstellung von mehrschichtigen Holzwerkstoffen sind im Prinzip bekannt und zum Beispiel in M. Dunky, P. Niemz, Holzwerkstoffe und Leime, Springer 2002, Seiten 91 bis 150 beschrieben.

### Komponente B): Salze von N-substituierten Carbamidsäuren

Als Salze von N-substituierten Carbamidsäuren eigenen sich in der Regel alle an sich bekannten Salze von N-substituierten Carbamidsäuren, bevorzugt Salze aus einer Brønsted-Base und einer N-substituierten Carbamidsäure. Der Begriff N-substituierte Carbamidsäure bedeutet im Zusammenhang mit dieser Erfindung mono- bzw. disubstituierte Carbamidsäuren, also N- bzw. N,N-substituierte Carbamidsäuren. N-substituierte Carbamidsäuren sind im Zusammenhang mit dieser Erfindung solche, in denen einer oder beide Wasserstoff(e) am Stickstoff der Carbamidsäure durch einen anderen Substituenten ersetzt (substituierte) ist (sind), also Wasserstoff kein Substituent darstellt.

Als Brønsted-Basen eignen sich alle Verbindungen mit Protonenenakzeptoreigenschaften.

### Unter diesen Basen eignen sich bevorzugt beispielsweise

- Ammoniak,
- primäre, sekundäre und tertiäre aliphatische C₁- bis C₅₀-Amine wie Methylamin, Ethylamin, Isopropylamin, tert.-Butylamin, 2-Ethylhexylamin, Diethylamin, Di-n-propylamin, Diisopropylamin, Di-n-butylamin, Di-(2-ethylhexyl)amin, Triethylamin, Tri-n-propylamin, Triisopropylamin, Tri-n-butylamin, Dimethylethylamin, Dimethyl-n-propylamin, n-Butylamin, n-Pentylamin, n-Hexylamin, n-Octylamin, n-Dodecylamin oder Stearylamin, bevorzugt C₃- bis C₁₂-Amine wie Isopropylamin, tert.-Butylamin, 2-Ethylhexylamin, Diethylamin, Di-n-propylamin, Diisopropylamin, Di-n-butylamin, Di-(2-ethylhexyl)amin, Triethylamin, Tri-n-propylamin, Triisopropylamin, Tri-n-butylamin, Dimethylethylamin, Dimethyl-n-propylamin, n-Butylamin, n-Pentylamin, n-Hexylamin, n-Octylamin oder n-Dodecylamin, bevorzugt C₃- bis C₆-Amine wie Triethylamin, Isopropylamin, tert.-Butylamin, 2-Ethylhexylamin, Diethylamin, Di-n-propylamin oder Diisopropylamin,
- primäre, sekundäre oder tertiäre aliphatische C₂- bis C₃₀-Diamine, bevorzugt primäre, sekundäre oder tertiäre aliphatische C₂- bis C₁₂-Diamine, besonders bevorzugt primäre, sekundäre oder tertiäre aliphatische C₂- bis C₈-Diamine wie 1,2-Ethylendiamin, 1,2-Propylendiamin, 1,3-Propylendiamin, 1,2-Butandiamin, 1,3-Butandiamin, 1,4-Butandiamin, 1,2-Pentandiamin, 1,3-Pentandiamin, 1,4-Pentandiamin, 1,5-Pentandiamin, Hexamethyl-endiamine oder Octamethylendiamine, insbesondere Ethylendiamin, 1,3-Propylendiamin oder 1,6-Hexamethylendiamin,
- primäre, sekundäre oder tertiäre aliphatische C₄- bis C₁₀₀₀-Polyamine wie Bis-Amino-propylmethylamin, Diethylentriamin, Triethylentetramin, Tetraethylenpentamin, Pentaethy-lenhexamin, Bis-Dimethylaminopropylamin, Polyethylenamine oder Polyvinylamine (beispielsweise die Lupasol®-Typen der BASF SE), bevorzugt Tetraethylenpentamin oder Lupasole®,
- C₁- bis C₂₀-Alkanolamine wie Ethanolamin, Diethanolamin, Triethanolamin, Propanolamin, Dipropanolamin und Tripropanolamin, bevorzugt Triethanolamin,
- C₂₀- bis C₁₀₀₀-Polyetheramine Polyethylenglykoldiamin, Polypropylenglykol-diamin und Polypropylenglykoltriamin (beispielsweise bekannt als Jeffamine^{®} D und T), Polytetrahydrofuran/Polypropylenglykol-Polyamine, bevorzugt Polyethylenglykol,
- cyclische C₄- bis C₁₀₀-Amine wie Morpholin, Piperidin, Piperazin, Pyridin, Methyldiaminocyclohexan, Cyclohexylaminopropylamin, Isophorondiamin, Aminoethylpiperazin oder Polytetrahydrofuran-Polyamine, bevorzugt Cyclohexylaminopropylamin, Methyldiaminocyclohexan, Cyclohexylaminopropylamin oder Methyldiaminocyclohexan,
- aromatische oder aromathaltige C₄- bis C₁₀₀-Monoamine oder Polyamine wie Pyrrol, Pyridin, Pyrazol, Imidazol, Benzimidazol, Imidazoline, Indol, Cinolin, Isochinolin, Purin, Pyrimidin, Oxazol, Thiazol, Thiazine, Porphyrine, Anilin, ortho-Diaminobenzol, meta-Diaminobenzol, para-Diaminobenzol, ortho-Diaminoxylol, meta-Diaminoxylol, para-Diaminoxylol, Aminopropylimidazol, Toluoldiamine (TDA) oder Poly-TDA, Methylendiphenyldiaminund PolyTDA, MethylenDiphenyldiamin (MDA) oder Poly-MDA, bevorzugt ortho-Diaminoxylol, meta-Diaminoxylol, para-Diaminoxylol, Aminopropylimidazol oder Poly-MDA,
- Polyamidoamine,
- Polyharnstoffamine,
- Guanidin oder deren Derivate wie Monomethylguanidin, Dimethylguanidin, Trimethylguanidin oder Tertramethylguanidin,
- Ammonium-, Alkali- oder Erdalkalihydroxide wie Ammoniumhydroxid, Lithiumhydroxid, Natriumhydroxid , Kaliumhydroxid, Rubidiumhydroxid, Calciumhydroxid oder Strontiumhydroxid, bevorzugt Ammoniumhydroxid, Natriumhydroxid oder Kaliumhydroxid,
- Ammonium-, Alkali- und Erdalkalicarbonate wie Ammoniumcarbonat, Lithiumcarbonat, Natriumcarbonat, Kaliumcarbonat, Rubidiumcarbonat, Magnesiumcarbonat, Calciumcarbonat oder Strontiumcarbonat, bevorzugt Ammoniumcarbonat, Natriumcarbonat, Kaliumcarbonat, Magnesiumcarbonat oder Calciumcarbonat,
- Ammonium-, Alkali- oder Erdalkalihydrogencarbonate wie Ammoniumhydrogencarbonat, Lithiumhydrogencarbonat, Natriumhydrogencarbonat, Kaliumhydrogencarbonat, Rubidiumhydrogencarbonat, Magnesiumhydrogencarbonat, Calciumhydrogencarbonat oder Strontiumhydrogencarbonat, bevorzugt Ammoniumhydrogencarbonat, Natriumhydrogencarbonat, Kaliumhydrogencarbonat, Magnesiumhydrogencarbonat oder Calciumhydrogencarbonat,
- C₁ bis C₅₀-Ammonium-, Alkali- und Erdalkalialkylalkoholate, bevorzugt C₁ bis C₄-Ammonium-, Alkali- und Erdalkalialkylalkoholate wie Ammoniummethanolat, Lithiummethanolat, Natriummethanolat, Kaliummethanolat, Magnesiummethanolat, Calciummethanolat, Ammoniumethanolat, Lithiumethanolat, Natriumethanolat, Kaliumethanolat, Magnesiumethanolat, Calciumethanolat, Ammonium-n-propanolat, Lithium-n-propanolat, Natrium-n-propanolat, Kalium-n-propanolat, Magnesium-n-propanolat, Calcium-n-propanolat, Ammonium-iso-propanolat, Lithium-iso-propanolat, Natrium-iso-propanolat, Kalium-iso-propanolat, Magnesium-iso-propanolat, Calcium-iso-propanolat, Ammonium-n-butanolat, Lithium-n-butanolat, Natrium-n-butanolat, Kalium-n-butanolat, Magnesium-n-butanolat, Calcium-n- butanolat, Ammonium-iso-butanolat, Lithium-iso-butanolat, Natrium-isobutanolat, Kalium-iso-butanolat, Magnesium-iso-butanolat oder Calcium-iso-butanolat, besonders bevorzugt C₁ bis C₃-Ammonium-, Alkali- und Erdalkalialkylalkoholate wie Ammoniummethanolat, Lithiummethanolat, Natriummethanolat, Kaliummethanolat, Magnesiummethanolat, Calciummethanolat, Ammoniumethanolat, Lithiumethanolat, Natriumethanolat, Kaliumethanolat, Magnesiumethanolat, Calciumethanolat, Ammonium-n-propanolat, Lithium-n-propanolat, Natrium-n-propanolat, Kalium-n-propanolat, Magnesium-n-propanolat, Calcium-n-propanolat, Ammonium-iso-propanolat, Lithium-iso-propanolat, Natrium-iso-propanolat, Kalium-iso-propanolat, Magnesium-iso-propanolat oder Calcium-iso-propanolat,
- gegebenenfalls C₁ bis C₄-Alkyl substituierte C₆- bis C₅₀-Ammonium-, Alkali- und Erdalkaliarylalkoholate wie Ammoniumphenolat, Lithiumphenolat, Natriumphenolat, Kaliumphenolat, Magnesiumphenolat, Calciumphenolat, Ammonium-2-tert.-butylphenolat, Lithium-2-tert.-butylphenolat, Natrium-2-tert.-butylphenolat, Kalium-2-tert.-butylphenolat, Magnesium-2-tert.-butylphenolat, Calcium-2-tert.-butylphenolat, Ammonium-4-tert.-butylphenolat, Lithium-4-tert.-butylphenolat, Natrium-4-tert.-butylphenolat, Kalium-4-tert.-butylphenolat, Magnesium-4-tert.-butylphenolat, Calcium-4-tert.-butylphenolat, Ammonium-2,4-tert.-butylphenolat, Lithium-2,4-tert.-butylphenolat, Natrium-2,4-tert.-butylphenolat, Kalium-2,4-tert.-butylphenolat, Magnesium-2,4-tert.-butylphenolat, Calcium-2,4-tert.-butylphenolat, Ammonium-2,6-tert.-butylphenolat, Lithium-2,6-tert.-butylphenolat, Natrium-2,6-tert.-butylphenolat, Kalium-2,6-tert.-butylphenolat, Magnesium-2,6-tert.-butylphenolat, Calcium-2,6-tert.-butylphenolat, Ammonium-2-octylphenolat, Lithium-2-octylphenolat, Natrium-2-octylphenolat, Kalium-2-octylphenolat, Magnesium-2-octylphenolat, Calcium-2-octylphenolat, Ammonium-4-octylphenolat, Lithium-4-octylphenolat, Natrium-4-octylphenolat, Kalium-4-octylphenolat, Magnesium-4-octylphenolat, Calcium-4-octylphenolat, Ammonium-2-nonylphenolat, Lithium-2-nonylphenolat, Natrium-2-nonylphenolat, Kalium-2-nonylphenolat, Magnesium-2-nonylphenolat, Calcium-2-nonylphenolat, Ammonium-4-nonylphenolat, Lithium-4-nonylphenolat, Natrium-4-nonylphenolat, Kalium-4-nonylphenolat, Magnesium-4-nonylphenolat oder Calcium-4-nonylphenolat, , bevorzugt Ammoniumphenolat, Lithiumphenolat, Natriumphenolat, Kaliumphenolat, Magnesiumphenolat oder Calciumphenolat,
- C₁- bis C₅₀-Ammonium-, Alkali- und Erdalkalialkylcarboxylate wie Ammoniumformiat, Lithiumformiat, Natriumformiat, Kaliumformiat, Magnesiumformiat, Calciumformiat, Ammoniumacetat, Lithiumacetat, Natriumacetat, Kaliumacetat, Magnesiumacetat, Calciumacetat, Ammoniumbutyrat, Lithiumbutyrat, Natriumbutyrat, Kaliumbutyrat, Magnesiumbutyrat, Calciumbutyrat, Ammoniumacrylat, Lithiumacrylat, Natriumacrylat, Kaliumacrylat, Magnesiumacrylat, Calciumacrylat, Ammoniummethacrylat, Lithiummethacrylat, Natriummethacrylat, Kaliummethacrylat, Magnesiummethacrylat, Calciummethacrylat, Ammoniumstearat, Lithiumstearat, Natriumstearat, Kaliumstearat, Magnesiumstearat oder Calciumstearat, bevorzugt Ammoniumbutyrat, Lithiumbutyrat, Natriumbutyrat, Kaliumbutyrat, Magnesiumbutyrat, Calciumbutyrat, Ammoniumstearat, Lithiumstearat, Natriumstearat, Kaliumstearat, Magnesiumstearat oder Calciumstearat,
- Ammonium-, Alkali- und Erdalkaliarylcarboxylate wie Ammonium-, Alkali- und Erdalkalibenzolcarboxylate, bevorzugt Ammoniumbenzoat, Lithiumbenzoat, Natriumbenzoat, Kaliumbenzoat, Magnesiumbenzoat, Calciumbenzoat, Ammoniumsalicylat, Lithiumsalicylat, Natriumsalicylat, Kaliumsalicylat, Magnesiumsalicylat oder Calciumsalicylat,
- C₁- bis C₅₀-Ammonium-, Alkali- und Erdalkalialkyl-di-carboxylate und -tri-carboxylate und - polycarboxylate wie Ammoniummalonat, Lithiummalonat, Natriummalonat, Kaliummalonat, Magnesiummalonat, Calciummalonat, Ammoniumoxalat, Lithiumoxalat, Natriumoxalat, Kaliumoxalat, Magnesiumoxalat, Calciumoxalat, Ammoniummaleinat, Lithiummaleinat, Natriummaleinat, Kaliummaleinat, Magnesiummaleinat, Calciummaleinat, Ammoniumsuccinat, Lithiumsuccinat, Natriumsuccinat, Kaliumsuccinat, Magnesiumsuccinat, Calciumsuccinat, Ammoniumfumarat, Lithiumfumarat, Natriumfumarat, Kaliumfumarat, Magnesiumfumarat, Calciumfumarat, Ammoniumcitrat, Lithiumcitrat, Natriumcitrat, Kaliumcitrat, Magnesiumcitrat oder Calciumcitrat,
- Ammonium-, Alkali- und Erdalkaliaryl-di-carboxylate und -tri-carboxylate und - polycarboxylate wie Ammoniumphthalat, Lithiumphthalat, Natriumphthalat, Kaliumphthalat, Magnesiumphthalat, Calciumphthalat, Ammoniumterephthalat, Lithiumterephthalat, Natriumterephthalat, Kaliumterephthalat, Magnesiumterephthalat oder Calciumterephthalat, bevorzugt Ammoniumterephthalat, Lithiumterephthalat, Natriumterephthalat, Kaliumterephthalat, Magnesiumterephthalat oder Calciumterephthalat.

Als N-substituierte Carbamidsäuren eignen sich insbesondere Verbindungen der allgemeinen Formel I 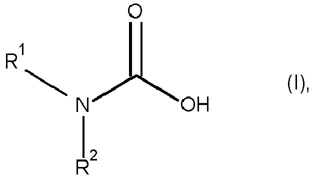 in der
- R¹: Wasserstoff,
- R¹ und R²: unabhängig voneinander C₁- bis C₂₀-Alkyl, C₂- bis C₂₀-Alkenyl, C₁- bis C₂₀-Hydroxyalkyl, C₂- bis C₂₀₀₀-Alkoxyalkyl, C₁- bis C₅₀-Aminoalkyl gegebenenfalls enthaltend cycloaliphatische oder aromatische Einheiten, C₂- bis C₂₀₀₀-Polyaminoalkyl, 5- oder 6-gliedrige gesättigte, teilweise ungesättigter oder aromatischer Heterocyclen, die 1, 2 oder 3 Heteroatome, ausgewählt aus der Gruppe Sauerstoff, Schwefel und Stickstoff, als Ringglieder enthalten und substituiert sein können, gegebenenfalls durch C₁- bis C₁₀-Alkyl substituiertes Aryl oder
- R¹ und R²: gemeinsam ein C₂- bis C₂₀-Alkylendi oder ein- bis dreihundertfach durch Sauerstoff- und/oder Stickstoffatome unterbrochenes C₂- bis C₉₀₀-Alkylendi.

Die N-substituierten Carbamidsäuren lassen sich aus einem primären oder sekundären Amin und Zuleitung oder Zugabe von CO₂, wie beispielsweise in US-A-3 320 187 oder Tetrahedron 68 2012 (7408) beschrieben, herstellen. Neben der Reaktion unter erhöhtem Druck kann bei Verwendung von nicht komprimiertem gasförmigem CO₂ oder Trockeneis und eines geeigneten Lösungsmittels, bevorzugt Wasser, Dichlormethan, Ethylacetat oder Methyl-tert.-butylether, auf die Verwendung einer Druckapparatur verzichtet werden. Das CO₂ wird bei einer Temperatur zwischen (-78) und +100°C, bevorzugt (-40) bis 60°C, besonders bevorzugt (-10) bis 30°C durch die 1 bis 50%ige wässrige Aminlösung (R¹-NH-R²), die gegebenenfalls noch eine zusätzliche Brønsted-Base enthält, geleitet, wobei die Salze der N- oder N,N'-substituierten Carbamidsäuren gebildet werden. Zur Isolierung des Produkts kann die Reaktionsmischung ggf. filtriert, zentrifugiert und/oder das Lösungsmittel destillativ gegebenenfalls unter reduziertem Druck abgetrennt werden. Die gebildeten Salze der Carbamidsäuren können im Anschluss an die Synthese weiter chemisch modifiziert werden. Zum Beispiel können eventuell noch vorhandene NH-Gruppen (zum Beispiel, wenn R¹ = Wasserstoff in der oben gezeigten Formel (I)) mit Aldehyden, beispielsweise Formaldehyd, Glyoxal, Acetaldehyd oder Propionaldehyd in einer dem Fachmann bekannten Synthese zu einem Hemiaminal (s. z.B. Urbansky, Edward T. "Carbinolamines and Geminal Diols in Aqueous Environmental Organic Chemistry"; Journal of Chemical Education 2000, Volume 77, 1644 bis1647) oder wie in DE-A-102009029030 beschrieben mit Epoxidgruppen-haltigen Verbindungen umgesetzt werden. Wichtig ist hierbei, dass die Carbamidsäurerest-Gruppe nach der chemischen Modifizierung noch besteht.

Dementsprechend haben die Substituenten der Reste der organischen Carbamidsäuren der allgemeinen Formel (I) folgende Restebedeutungen:
R¹
   Wasserstoff oder
R¹ und R² unabhängig voneinander
   - C₁- bis C₂₀-Alkyl wie Methyl, Ethyl, n-Propyl, iso-Propyl, n-Butyl, iso-Butyl, sec.-Butyl, tert.-Butyl, n-Pentyl, iso-Pentyl, neo-Pentyl, n-Hexyl, iso-Hexyl, n-Heptyl, iso-Heptyl, n-Octyl, iso-Octyl, 2-Ethylhexyl, n-Nonyl, iso-Nonyl, n-Decyl, iso-Decyl, 2-Propylheptyl, 4-Methyl-2-propylhexyl, n-Undecyl, iso-Undecyl, n-Dodecyl oder iso-Dodecyl, bevorzugt C₁- bis C₈-Alkyl wie Methyl, Ethyl, n-Propyl, iso-Propyl, n-Butyl, iso-Butyl, sec.-Butyl, tert.-Butyl, n-Pentyl, iso-Pentyl, neo-Pentyl, n-Hexyl, iso-Hexyl, n-Heptyl, iso-Heptyl, n-Octyl, iso-Octyl oder 2-Ethylhexyl, besonders bevorzugt C₁- bis C₄-Alkyl wie Methyl, Ethyl, n-Propyl, iso-Propyl, n-Butyl, iso-Butyl, sec.-Butyl oder tert.-Butyl,
   - C₂- bis C₂₀-Alkenyl wie Ethenyl, n-Propenyl, iso-Propenyl, n-Butenyl, iso-Butenyl, sec.-Butenyl, tert.-Butenyl, n-Pentenyl, iso-Pentenyl, sec.-Pentenyl, neo-Pentenyl, 1,2-Dimethenylpropenyl, n-Hexenyl, iso-Hexenyl, sec.-Hexenyl, n-Heptenyl, iso-Heptenyl, n-Octenyl, iso-Octenyl, n-Nonenyl, iso-Nonenyl, n-Decenyl, iso-Decenyl, n-Undecenyl, iso-Undecenyl, n-Dodecenyl und iso-Dodecenyl, besonders bevorzugt C₂- bis C₄-Alkenyl wie Ethenyl, n-Propenyl, iso-Propenyl, n-Butenyl, iso-Butenyl, sec.-Butenyl oder tert.-Butenyl, bevorzugt C₂- bis C₈-Alkenyl wie Ethenyl, n-Propenyl, iso-Propenyl, n-Butenyl, iso-Butenyl, sec.-Butenyl, tert.-Butenyl, n-Pentenyl, iso-Pentenyl, sec.-Pentenyl, neo-Pentenyl, 1,2-Dimethenylpropenyl, n-Hexenyl, iso-Hexenyl, sec.-Hexenyl, n-Heptenyl, iso-Heptenyl, n-Octenyl oder iso-Octenyl, besonders bevorzugt C₂- bis C₄-Alkenyl wie Ethenyl, n-Propenyl, iso-Propenyl, n-Butenyl, iso-Butenyl, sec.-Butenyl oder tert.-Butenyl,
   - C₁- bis C₂₀-Hydroxyalkyl wie Hydroxymethyl, Hydroxyethyl, Hydroxy-n-propyl, Hydroxy-iso-propyl, Hydroxy-n-butyl, Hydroxy-iso-butyl, Hydroxy-sec.-butyl, Hydroxy-tert.-butyl, Hydroxy-n-pentyl, Hydroxy-iso-pentyl, Hydroxy-sec.-pentyl, Hydroxy-tert.-pentyl, Hydroxy-neo-pentyl, Hydroxy-n-hexyl, Hydroxy-iso-hexyl, Hydroxy-sec.-hexyl, Hydroxy-tert.-hexyl, Hydroxy-neo-hexyl, Hydroxy-n-heptyl, Hydroxy-iso-heptyl, Hydroxy-n-octyl, Hydroxy-iso-octyl, Hydroxy- n-nonyl, Hydroxy-iso-nonyl, Hydroxy-n-decyl, Hydroxy-iso-decyl, Hydroxy-n-undecyl, Hydroxy-iso-undecyl, Hydroxy-n-dodecyl, Hydroxy-iso-dodecyl, Hydroxy-n-hexadecyl, Hydroxy-n-octadecyl oder Hydroxy-n-eiconyl, bevorzugt C₁- bis C₈-Hydroxyalkyle wie Hydroxymethyl, Hydroxyethyl, Hydroxy-n-propyl, Hydroxy-iso-propyl, Hydroxy-n-butyl, Hydroxy-iso-butyl, Hydroxy-sec.-butyl, Hydroxy-tert.-butyl, Hydroxy-n-pentyl, Hydroxy-iso-pentyl, Hydroxy-sec.-pentyl, Hydroxy-tert.-pentyl, Hydroxy-neo-pentyl, Hydroxy-n-hexyl, Hydroxy-iso-hexyl, Hydroxy-sec.-hexyl, Hydroxy-tert.-hexyl, Hydroxy-neo-hexyl, Hydroxy-n-heptyl, Hydroxy-iso-heptyl, Hydroxy-n-octyl oder Hydroxy-iso-octyl, besonders bevorzugt C₃- bis C₆-Hydroxy-n-propyl, Hydroxy-iso-propyl, Hydroxy-n-butyl, Hydroxy-iso-butyl, Hydroxy-sec.-butyl, Hydroxy-tert.-butyl, Hydroxy-n-pentyl, Hydroxy-iso-pentyl, Hydroxy-sec.-pentyl, Hydroxy-tert.-pentyl, Hydroxy-neo-pentyl, Hydroxy-n-hexyl, Hydroxy-iso-hexyl, Hydroxy-sec.-hexyl, Hydroxy-tert.-hexyl oder Hydroxy-neo-hexyl
   - C₂- bis C₂₀₀₀-Alkoxyalkyl wie Methoxymethyl, Ethoxymethyl, n-Propoxymethyl, iso-Propoxymethyl, n-Butoxymethyl, iso-Butoxymethyl, sec.-Butoxymethyl, tert.-Butoxymethyl, 1-Methoxy-ethyl, 2-Methoxy-ethyl, n-Pentroxymethyl, iso-Pentoxymethyl, n-Hexoxymethyl, iso-Hexoxymethyl, n-Octoxymethyl, iso-Octoxymethyl, n-Decoxymethyl, iso-Decoxymethyl, sowie Reste der Polyethylenglycole bestehend aus (-C₂H₄-O)_{b}-R⁴- (b = 1 bis 1000, R⁴= H, CH₃, C₂H₅, C₄H₉), Polypropylengylcole bestehend aus (-C₃H₆-O)_{c}-R⁴ (c = 1 bis 1000) oder aus Produkten bestehen aus Mischungen der beiden Einheiten (-C₂H₄-O)_{b}-(-C₃H₆-O)_{c}-R⁴, bevorzugt C₂- bis C₈-Alkoxyalkyl wie Methoxymethyl, Ethoxymethyl, n-Propoxymethyl, iso-Propoxymethyl, n-Butoxymethyl, iso-Butoxymethyl, sec.-Butoxymethyl, tert.-Butoxymethyl, 1-Methoxy-ethyl, 2-Methoxy-ethyl, n-Pentroxymethyl, iso-Pentoxymethyl, n-Hexoxymethyl, iso-Hexoxymethyl, n-Octoxymethyl, iso-Octoxymethyl, sowie Reste der Polyethylenglycole bestehend aus (-C₂H₄-O)_{b}-R⁴- (b = 1 bis 1000, R⁴= H, CH₃, C₂H₅, C₄H₉), Polypropylengylcole bestehend aus (-C₃H₆-O)_{c}-R⁴ (c = 1 bis 1000) oder aus Produkten bestehen aus Mischungen der beiden Einheiten (-C₂H₄-O)_{b}-(-C₃H₆-O)_{c}-R⁴, besonders bevorzugt C₂- bis C₄-Alkoxyalkyl wie Methoxymethyl, Ethoxymethyl, n-Propoxymethyl, iso-Propoxymethyl, n-Butoxymethyl, iso-Butoxymethyl, sec.-Butoxymethyl, tert.-Butoxymethyl, 1-Methoxy-ethyl oder 2-Methoxy-ethyl, sowie Reste der Polyethylenglycole bestehend aus (-C₂H₄-O)_{b}-R⁴- (b = 1 bis 1000, R⁴= H, CH₃, C₂H₅, C₄H₉), Polypropylengylcole bestehend aus (-C₃H₆-O)_{c}-R⁴ (c = 1 bis 1000) oder aus Produkten bestehen aus Mischungen der beiden Einheiten (-C₂H₄-O)_{b}-(-C₃H₆-O)_{c}-R⁴,
   - C₁- bis C₅₀-Aminoalkyl gegebenenfalls enthaltend cycloaliphatische oder aromatische Einheiten wie Aminomethyl, 1-Aminoethyl, 2-Aminoethyl, 1-Amino-n-propyl, 2-Amino-n-propyl, 3-Amino-n-propyl, 1-Aminomethyl-ethyl, 1-Aminohexyl, 1-Aminoheptyl, 1-Aminooctyl, 1-Aminodecyl, 1-Aminododecyl, 5-Amino-2-methylcyclohexy, 3-Amino-4-methylcyclohexyl , 5-Amino-2-methylphenyl, 3-Amino-4-methylcyclophenyl, 3-(Imidazyl)-propyl, p-(p-Aminophenylmethyl)phenyl, p-(o-Aminophenylmethyl)phenyl, o-(p-Aminophenylmethyl)phenyl, o-(o-Aminophenylmethyl)phenyl, 4-(4-Aminocyclohexyl)methylcyclohexyl, 2-(4-Aminocyclohexyl)methylcyclohexyl, 4-(2-Aminocyclohexyl)methylcyclohexyl, 2-(2-Aminocyclohexyl)methylcyclohexyl, 2-Aminomethylphenyl)methyl, (3-Aminomethylphenyl)methyl, (3-Aminomethylphenyl)methyl, 2-(3,4-Dihydroxyphenyl)ethyl oder 2-(3,4-Dihydroxyphenyl)-1-carboxylethyl, bevorzugt C₁-bis C₂₀-Aminoalkyl gegebenenfalls enthaltend cycloaliphatische oder aromatische Einheiten wie Aminomethyl, 1-Aminoethyl, 2-Aminoethyl, 1-Amino-n-propyl, 2-Amino-n-propyl, 3-Amino-n-propyl, 1-Aminomethyl-ethyl, 1-Aminohexyl oder 1-Aminooctyl, 5-Amino-2-methylcyclohexy, 3-Amino-4-methylcyclohexyl , 5-Amino-2-methylphenyl, 3-Amino-4-methylcyclophenyl, 3(Imidazyl)-propyl, p-(p-Aminophenylmethyl)phenyl, p-(o-Aminophenylmethyl)phenyl, o-(p-Aminophenylmethyl)phenyl, o-(o-Aminophenylmethyl)phenyl, 4-(4-Aminocyclohexyl)methylcyclohexyl, 2-(4-Aminocyclohexyl)methylcyclohexyl, 4-(2-Aminocyclohexyl)methylcyclohexyl, 2-(2-Aminocyclohexyl)methylcyclohexyl, 2-Aminomethylphenyl)methyl, (3-Aminomethylphenyl)methyl, (3-Aminomethylphenyl)methyl, 2-(3,4-Dihydroxyphenyl)ethyl oder 2-(3,4-Dihydroxyphenyl-1-carboxylethyl, besonders bevorzugt C₁- bis C₁₂-Aminoalkyl gegebenenfalls enthaltend cycloaliphatische oder aromatische Einheiten wie Aminomethyl, 1-Aminoethyl, 2-Aminoethyl, 1-Amino-n-propyl, 2-Amino-n-propyl, 3-Amino-n-propyl, 1-Aminomethyl-ethyl, 1-Aminohexyl, 5-Amino-2-methylcyclohexy, 3-Amino-4-methylcyclohexyl , 5-Amino-2-methylphenyl, 3-Amino-4-methylcyclophenyl, 3(Imidazyl)-propyl, p-(p-Aminophenylmethyl)phenyl, p-(o-Aminophenylmethyl)phenyl, o-(p-Aminophenylmethyl)phenyl, o-(o-Aminophenylmethyl)phenyl, 4-(4-Aminocyclohexyl)methylcyclohexyl, 2-(4-Aminocyclohexyl)methylcyclohexyl, 4-(2-Aminocyclohexyl)methylcyclohexyl, 2-(2-Aminocyclohexyl)methylcyclohexyl, (2-Aminomethylphenyl)methyl, (3-Aminomethylphenyl)methyl, (3-Aminomethylphenyl)methyl, 2-(3,4-Dihydroxyphenyl)ethyl oder 2-(3,4-Dihydroxyphenyl)-1-carboxylethyl,
   - C₂- bis C₂₀₀₀-Polyaminoalkyle wie entsprechende Reste der Polyethylenimine z.B. bestehend aus den Einheiten X = -(C₂H₄-NR³)ₐ-H, wobei R³ = H, X' (X' = -(C₂H₄-NR³)ₐ-H und a'<a); a = 1 bis 1000 und a' = 0 bis 999, 3,7-Diazahepyl, 4,7,11-Triazaundecyl, 4,8-Diazaocyl, 4-(Methylaza)-8-azaocyl, (3-Amino-1,5,5,-trimethycyclohexyl)methyl oder 5-Aminomethyl-3,3,5-trimethylcyclohexyl,
   - 5- oder 6-gliedrige gesättigte, teilweise ungesättigter oder aromatischer Heterocyclen, die 1, 2 oder 3 Heteroatome, ausgewählt aus der Gruppe Sauerstoff, Schwefel und Stickstoff, als Ringglieder enthalten und substituiert sein können, beispielsweise Tetrahydrofuranyl, Tetrahydrothienyl, Pyrrolidinyl, Pyrazolidinyl, Imidazolidinyl, Oxazolidinyl, Isoxazolidinyl, Thiazolidinyl, Isothiazolidinyl, Triazolidinyl, Oxadiazolidinyl, Thiadiazolidinyl, Piperidinyl, Tetrahydropyranyl, Piperazinyl, Morpholinyl, Thiomorpholinyl, Dihydrofuranyl, Dihydrothienyl, Pyrrolinyl, Pyrazolinyl, Imidazolinyl, Oxazolinyl, Isoxazolinyl, Thiazolinyl, Isothiazolinyl, Triazolinyl, Oxadiazolinyl, Thiadiazolinyl, Tetrahydropyridyl, Dihydropyridyl, Dihydropyranyl, Pyranyl, Furanyl, Thienyl, Pyrrolyl, Pyrazolyl, Imidazolyl, Oxazoylyl, Isoxazolyl, Thiazolyl, Isothiazolyl, Triazolyl, Oxadiazolyl, Thiadiazolyl, Pyridyl, Pyridazonyl, Pyrimidyl, Pyrazinyl, Triazinyl, 2-Aminophenyl, 3-Aminophenyl 4-Aminophenyl, ([3-Aminomethyl]-2-oxocyclopentan)methyl oder (3-Aminomethylfuranyl)methyl,
   - gegebenenfalls durch C₁- bis C₁₀-Alkyl substituiertes Aryl wie Phenyl, Naphthenyl, Anthracenyl, Phenanthrenyl, ortho-Methylphenyl, meta-Methylphenyl, para-Methylphenyl, ortho-tert.-Butylphenyl, para-tert.-Butylphenyl, ortho/para-di-tert.-Butylphenyl, para-(1,1,3,3-Tetramethylbutyl)phenyl oder para-(n-Nonyl)phenyl,
      oder
R¹ und R² gemeinsam
   - C₂- bis C₂₀-Alkylen wie Ethylen-1,2-di, n-Propylen-1,3-di, iso-Propylen-1,2-di, n-Butylen-1,4-di, iso-Butylen-1,3-, sec.-Butylen-1,3-, tert.-Butylen-1,3-di, n-Pentylen-1,5-di, iso-Pentylen-1,4-di, neo-Pentylen-1,3-di, neo-Pentylen-1,4-di, n-Hexylen-1,6-di, n-Heptylen-1,7-di, bevorzugt C₃- bis C₈-Alkylen wie n-Propylen-1,3-di, n-Butylen-1,4-di, iso-Butylen-1,3-, sec.-Butylen-1,3-, tert.-Butylen-1,3-di, n-Pentylen-1,5-di, iso-Pentylen-1,4-di, neo-Pentylen-1,3-di, neo-Pentylen-1,4-di, n-Hexylen-1,6-di, n-Heptylen-1,7-di, besonders bevorzugt C- bis C₇-Alkylen wie n-Butylen-1,4-di, n-Pentylen-1,5-di, iso-Pentylen-1,4-di, neo-Pentylen-1,4-di, n-Hexylen-1,6-di oder n-Heptylen-1,7-di,
   - ein- bis dreihundertfach durch Sauerstoff- und/oder Stickstoffatome unterbrochenes C₂-bis C₉₀₀-Alkylen wie beispielsweise Ethylaminoethyl oder Polymere der Formel Y =-C₂H₄-(NR⁵-C₂H₄)_{d}-C₂H₄- mit R⁵ = H, Y' (mit d' als Index der sich wiederholenden Einheit mit d'<d); d = 1 - 300 oder Propylaminopropyl oder entsprechende polymere Reste der Formel Z = -C₃H₆-(NR⁶-C₃H₆)ₑ-C₃H₆- mit R⁶= H, Z' (mit e' als Index der sich wiederholenden Einheit mit e'<e); e = 1 bis 300, Ethyloxoethyl und Propyloxopropyl oder Polyethylenglycole mit den Einheiten V = -C₂H₄(-C₂H₄-O-)_{f}C₂H₄- mit f = 1 bis 300 bzw. Polypropylenglycole mit den Einheiten W = -C₃H₆(-C₃H₆-O-)_{f}-C₃H₆- mit f = 1 bis 300.

### Komponente C): Bindemittel

Als Bindemittel eignen sich Harze wie Phenolformaldehydharze, Aminoplastharze, organische Isoyanate mit mindestens 2 Isocyanatgruppen oder deren Gemische. Die Harze können für sich alleine, als einziger Harzbestandteil oder Kombination aus zwei oder mehreren Harzbestandteilen der unterschiedlichen Harze der Gruppe Phenolformaldehydharze, Aminoplastharze und organische Isoyanate mit mindestens 2 Isocyanatgruppen eingesetzt werden.

### Aminoplaste

Als Melamin-Formaldehyd- und Harnstoff-Formaldehyd-Kondensate (sog. Aminoplastharze) können alle dem Fachmann, vorzugsweise die für die Herstellung von lignocellulosehaltigen Werkstoffen bekannten, Aminoplastharze verwendet werden. Derartige Harze sowie ihre Herstellung sind beispielsweise in Ullmanns Enzyklopädie der technischen Chemie, 4., neubearbeitete und erweiterte Auflage, Verlag Chemie, 1973, Seiten 403 bis 424 "Aminoplaste" und Ullmann's Encyclopedia of Industrial Chemistry, Vol. A2, VCH Verlagsgesellschaft, 1985, Seiten 115 bis 141 "Amino Resins" sowie in M. Dunky, P. Niemz, Holzwerkstoffe und Leime, Springer 2002, Seiten 251 bis 259 (UF-Harze) und Seiten 303 bis 313 (MUF und UF mit geringer Menge Melamin) beschrieben und können durch Umsetzen der Carbamidgruppen-haltigen Verbindungen, vorzugsweise Harnstoff, Melamin oder deren Gemischen, mit den Aldehyden, vorzugsweise Formaldehyd, in den gewünschten Molverhältnissen - Carbamidgruppe zum Aldehyd - vorzugsweise in Wasser als Lösungsmittel, hergestellt werden.

Beispiele für vernetzbare Stickstoffverbindungen sind, ohne darauf beschränkt zu sein:
- 1,3-Bis(hydroxymethyl)-4,5-dihydroxyimidazolidin-2-on (DMDHEU),
- 1,3-Bis(hydroxymethyl)-4,5-dihydroxyimidazolidin-2-on, das mit einem C₁- bis C₆-Alkanol, einem C₂- bis C₆-Polyol oder einem Oligoalkylenglykol modifiziert ist (modifiziertes DMD-HEU bzw. mDMDHEU),
- 1,3-Bis(hydroxymethyl)harnstoff,
- 1,3-Bis(methoxymethyl)harnstoff,
- 1-Hydroxymethyl-3-methylharnstoff,
- 1 -Hydroxymethyl-3-methyl-4,5-dihydroxyimidazolidin-2-on,
- 1-Hydroxymethyl-4,5-dihydroxyimidazolidin-2-on,
- 1,3-Bis(hydroxymethyl)imidazolidin-2-on (Dimethylolethylenharnstoff),
- 1,3-Bis(hydroxymethyl)-1,3-hexahydropyrimidin-2-on (Dimethylolpropylenharnstoff),
- 1,3-Bis(methoxymethyl)-4,5-dihydroxyimidazolidin-2-on (DMeDHEU),
- Tetra(hydroxymethyl)acetylendiharnstoff,
- niedermolekulare Melamin-Formaldehyd-Harze (MF-Harze) wie Poly-(hydroxymethyl)melamin mit wenigstens 2, z.B. 2, 3, 4, 5 oder 6 N-Hydroxymethyl-gruppen, wie 3-fach methyloliertes Melamin (= 2,4,6-Tris-(N-hydroxymethyl-amino)-1,3,5-triazin) und
- niedermolekulare Melamin-Formaldehyd-Harze (MF-Harze) wie Poly(hydroxymethyl)melamin mit wenigstens 2, z.B. 2, 3, 4, 5 oder 6 N-Hydroxymethyl-gruppen, die mit einem C₁- bis C₆-Alkanol, einem C₂- bis C₆-Polyol oder einem Oligoalkylenglykol modifiziert sind (modifizierte MF-Harze)
und Mischungen davon.

Das Einstellen des gewünschten molaren Verhältnisses Aldehyd, vorzugsweise Formaldehyd, zur gegebenenfalls teilweise mit organischen Resten substituierten Amino-Gruppe kann auch durch Zusatz von -NH₂-Gruppen-tragenden Monomeren zu formaldehydreicheren fertigen, vorzugsweise kommerziellen, Aminoplastharzen erfolgen. NH₂-Gruppen-tragende Monomere sind vorzugsweise Harnstoff, Melamin oder deren Gemische, besonders bevorzugt Harnstoff.

Als Aminoplastharze werden bevorzugt Polykondensationsprodukte aus Verbindungen mit mindestens einer, gegebenenfalls teilweise mit organischen Resten substituierten, Amidgruppe (die Amidgruppe wird auch als "Carboxamidgruppe" bezeichnet) und einem Aldehyd, vorzugsweise Formaldehyd, verstanden; besonders bevorzugt Harnstoff-Formaldehydharze (UF-Harze), Melamin-Formaldehydharze (MF-Harze) oder melaminhaltige Harnstoff-Formaldehydharze (MUF-Harze), insbesondere Harnstoff-Formaldehydharze, beispielsweise Kaurit^{®} Leim-Typen der Firma BASF SE. Weiterhin ganz bevorzugte Aminoplastharze sind Polykondensationsprodukte aus Verbindungen mit mindestens einer, auch teilweise mit organischen Resten substituierten, Aminogruppe und Aldehyd, worin das molare Verhältnis Aldehyd zur gegebenenfalls teilweise mit organischen Resten substituierten Amino-Gruppe, im Bereich von 0,3:1 bis 2:1, bevorzugt 0,3:1 bis 1,6:1, besonders bevorzugt 0,3:1 bis 0,45:1, ganz besonders bevorzugt 0,3:1 bis 0,4:1 liegt.

Die genannten Aminoplastharze werden üblicherweise in flüssiger Form, meist in einem flüssigen Medium suspendiert, vorzugsweise in wässriger Suspension oder aber auch als Feststoff eingesetzt.

### Phenoplaste

Phenolformaldehydkondensate (auch Phenolformaldehyd-(PF)-Harze genannt) sind dem Fachmann bekannt, siehe zum Beispiel Kunststoff-Handbuch, 2. Auflage, Hanser 1988, Band 10 "Duroplaste", Seiten 12 bis 40. Neben dem unsubstituierten Phenol können auch dessen Derivate, wie beispielsweise Resorcinol, ortho-, meta- oder para-Kresol, ortho- oder para-tert.-Butylphenol, 2,6- oder 2,4-di-tert.-Butylphenol, para-Octylphenol oder para-Nonylphenol oder deren Mischungen eingesetzt werden.

Als Gemische der Melamin-, Harnstoff- oder Phenol-Formaldehyd-Kondensate eigenen sich Mischungen der beschriebenen Aminoplaste und der Phenoplaste. Das Mischungsverhältnis auf die Festharzgehalt bezogen von Aminoplast zu Phenoplast beträgt in der Regel 99,9:0,1 bis 0,1:99,9, bevorzugt 99:1 bis 20:80, besonders bevorzugt 98:2 bis 80:20.

### Organische Isocyanate

Als organische Isocyanate eignen sich organische Isocyanate mit mindestens zwei Isocyanatgruppen oder deren Gemische, insbesondere alle dem Fachmann, vorzugsweise die für die Herstellung von Lignocellulosewerkstoffen oder Polyurethanen bekannten, organischen Isocyanate oder deren Gemische. Derartige organische Isocyanate sowie ihre Herstellung und Anwendung sind beispielsweise in Becker/Braun, Kunststoff Handbuch, 3. neubearbeitete Auflage, Band 7 "Polyurethane", Hanser 1993, Seiten 17 bis 21, Seiten 76 bis 88 und Seiten 665 bis 671 beschrieben.

Bevorzugte organische Isocyanate sind oligomere Isocyanate mit 2 bis 10, vorzugsweise 2 bis 8 Monomer-Einheiten und im Mittel mindestens einer Isocyanatgruppe pro Monomer-Einheit oder deren Gemische, besonders bevorzugt das oligomere organische Isocyanat PMDI ("Polymeres Methylendiphenylendiisocyanat") das erhältlich ist durch Kondensation von Formaldehyd mit Anilin und Phosgenierung der bei der Kondensation entstanden Isomeren und Oligomeren (siehe zum Beispiel Becker/Braun, Kunststoff Handbuch, 3. neubearbeitete Auflage, Band 7 "Polyurethane", Hanser 1993, Seiten 18 letzter Absatz bis Seite 19, zweiter Absatz und Seite 76, fünfter Absatz), ganz besonders bevorzugt Produkte der LUPRANAT^{®}-Typenreihe der BASF SE, insbesondere LUPRANAT^{®} M 20 FB der BASF SE.

### Komponente D): Mikrofibrillierte Cellulose

Die mikrofibrillierte Cellulose (MFC), die auch als Mikrocellulose, (Cellulose) Mikrofibrillen, nanofibrillierte Cellulose, Nanocellulose oder (Cellulose) Nanofibrillen bezeichnet wird (Cellulose 2010, 17, 459; Seite 460, rechte Spalte) kann auf den beschriebenen Wegen als Lösung oder als Feststoff mit den übrigen Komponenten zusammengebracht werden.

### Komponente E): Hydrophobierungsmittel

Als Hydrophobierungsmittel eignen sich die gebräuchlichen Verbindungen wie Silane, Alkoxysiloxane, Silicone, halogenierte und nicht halogenierte Alkane und Paraffine.

### Komponente F): Effektstoffe

Der Begriff Effektstoff umfasst sowohl organische als auch anorganische Materialien, die dem Holzwerkstoff eine Eigenschaft verleihen, welche es in unbehandelter Form nicht oder nur unvollkommen aufweist, z.B. Farbe, verbesserte Oxidationsstabilität oder UV-Stabilität, aber auch Resistenz gegenüber holzschädigenden Mikroorganismen oder Insekten. Dementsprechend handelt es sich bei den Effektstoffen insbesondere um Farbmittel, einschließlich Farbstoffe und Pigmente, um UV-Stabilisatoren, Antioxidationsmitteln, Fungizide und/oder Insektizide.

Als Effektstoffe eignen sich organische Farbpigmente, anorganische Farbpigmente, UV-Absorber, Antioxidantien, Biozide und/oder Stabilisatoren.

Beispiele für geeignete organische Farbpigmente sind:
- Monoazopigmente: C.I. Pigment Brown 25; C.I. Pigment Orange 5, 13, 36, 38, 64 und 67; C.I. Pigment Red 1, 2, 3, 4, 5, 8, 9, 12, 17, 22, 23, 31, 48:1, 48:2, 48: 3, 48:4, 49, 49:1, 51:1, 52:1, 52:2, 53, 53:1, 53:3, 57:1, 58:2, 58:4, 63, 112, 146, 148, 170, 175, 184, 185, 187, 191:1, 208, 210, 245, 247 und 251; C.I. PigmentYellow 1, 3, 62, 65, 73, 74, 97, 120, 151, 154, 168, 181, 183 und 191; C.I. PigmentViolet 32;
- Disazopigmente: C.I. Pigment Orange 16, 34, 44 und 72; C.I. Pigment Red 144, 166, 214, 220, 221 und242; C.I. PigmentYellow 12, 13, 14, 16, 17, 81, 83, 106, 113, 126, 127, 155, 174, 176, 180 und 188;
- Disazokondensationspigmente: C.I. Pigment Yellow 93, 95 und 128; C.I. Pigment Red 144, 166, 214, 220, 242 und 262; C.I. Pigment Brown 23 und 41;
- Anthanthronpigmente: C.I. Pigment Red 168;
- Anthrachinonpigmente: C.I. Pigment Yellow 147, 177 und 199; C.I. Pigment Violet 31;
- Anthrapyrimidinpigmente: C.I. Pigment Yellow 108;
- Chinacridonpigmente: C.I. Pigment Orange 48 und 49; C.I. Pigment Red 122, 202, 206 und 209; C.I. Pigment Violet 19;
- Chinophthalonpigmente: C.I. Pigment Yellow 138;
- Diketopyrrolopyrrolpigmente: C.I. Pigment Orange 71, 73 und 81; C.I. Pigment Red 254, 255, 264, 270 und 272;
- Dioxazinpigmente: C.I. Pigment Violet 23 und 37; C.I. Pigment Blue 80;
- Flavanthronpigmente: C.I. Pigment Yellow 24;
- Indanthronpigmente: C.I. Pigment Blue 60 und 64;
- Isoindolinpigmente: C.I. Pigmente Orange 61 und 69; C.I. Pigment Red 260; C.I. Pigment Yellow 139 und 185;
- Isoindolinonpigmente: C.I. Pigment Yellow 109, 110 und 173;
- Isoviolanthronpigmente: C.I. Pigment Violet 31;
- Metallkomplexpigmente: C.I. Pigment Red 257; C.I. PigmentYellow 117, 129, 150, 153 und 177; C.I. Pigment Green 8;
- Perinonpigmente: C.I. Pigment Orange 43; C.I. Pigment Red 194;
- Perylenpigmente: C.I. Pigment Black 31 und 32; C.I. Pigment Red 123, 149, 178, 179, 190 und 224; C.I. Pigment Violet 29;
- Phthalocyaninpigmente: C.I. Pigment Blue 15, 15:1, 15:2, 15:3, 15:4, 15:6 und 16; C.I. Pigment Green 7 und 36;
- Pyranthronpigmente: C.I. Pigment Orange 51; C.I. Pigment Red 216;
- Pyrazolochinazolonpigmente: C.I. Pigment Orange 67; C.I. Pigment Red 251;
- Thioindigopigmente: C.I. Pigment Red 88 und 181; C.I. Pigment Violet 38;
- Triarylcarboniumpigmente: C.I. Pigment Blue 1, 61 und 62; C.I. Pigment Green 1; C.I. Pigment Red 81, 81:1 und 169; C.I. Pigment Violet 1, 2, 3 und 27;
- C.I. Pigment Black 1 (Anilinschwarz);
- C.I. Pigment Yellow 101 (Aldazingelb);
- C.I. Pigment Brown 22.

Geeignete anorganische Farbpigmente sind z.B.:
- Weißpigmente: Titandioxid (C.I. Pigment White 6), Zinkweiß, Farbenzinkoxid; Zinksulfid, Lithopone;
- Schwarzpigmente: Eisenoxidschwarz (C.I. Pigment Black 11), Eisen-Mangan-Schwarz, Spinellschwarz (C.I. Pigment Black 27); Ruß (C.I. Pigment Black 7);
- Buntpigmente: Chromoxid, Chromoxidhydratgrün; Chromgrün (C.I. Pigment Green 48); Cobaltgrün (C.I. Pigment Green 50); Ultramaringrün; Kobaltblau (C.I. Pigment Blue 28 und 36; C.I. Pigment Blue 72); Ultramarinblau; Manganblau; Ultramarinviolett; Kobalt- und Manganviolett; Eisenoxid rot (C.I. Pigment Red 101 ); Cadmiumsulfoselenid (C.I. Pigment Red 108); Cersulfid (C.I. Pigment Red 265); Molybdatrot (C. I. Pigment Red 104 ); Ultramarin rot; Eisenoxidbraun (C.I. Pigment Brown 6 und 7), Mischbraun, Spinell- und Korundphasen (C.I. Pigment Brown 29, 31, 33, 34, 35, 37, 39 und 40), Chromtitangelb (C.I. Pigment Brown 24), Chromorange; Cersulfid (C.I. Pigment Orange 75); Eisenoxidgelb (C.I. Pigment Yellow 42); Nickeltitangelb (C.I. Pigment Yellow 53; C.I. Pigment Yellow 157, 158, 159, 160, 161, 162, 163, 164 und 189); Chromtitangelb; Spinellphasen (C.I. Pigment Yellow 119); Cadmiumsulfid und Cadmiumzinksulfid (C.I. Pigment Yellow 37 und 35); Chromgelb (C.I. Pigment Yellow 34); Bismutvanadat (C. I. Pigment Yellow 184).

Als Effektstoffe können auch UV-Absorber, Antioxidantien und/oder Stabilisatoren eingesetzt werden.

Beispiel für UV-Absorber sind die Verbindungen der nachfolgend aufgeführten Gruppen a) bis g). Beispiele für Stabilisatoren sind die nachfolgend aufgeführten Verbindungen der Gruppen i) bis q).
f.a) 4,4-Diarylbutadiene,
f.b) Zimtsäureester,
f.c) Benzotriazole,
f.d) Hydroxybenzophenone,
f.e) Diphenylcyanacrylate,
f.f) Oxamide,
f.g) 2-Phenyl-1,3,5-triazine;
f.h) Antioxidantien,
f.i) sterisch gehinderte Amine,
f.j) Metalldesaktivatoren,
f.k) Phosphite und Phosphonite,
f.l) Hydroxylamine,
f.m) Nitrone,
f.n) Aminoxide,
f.o) Benzofuranone und Indolinone,
f.p) Thiosynergisten und
f.q) Peroxid-zerstörende Verbindungen.

Zur Gruppe f.a) der 4,4-Diarylbutadiene zählen beispielsweise Verbindungen der Formel A.

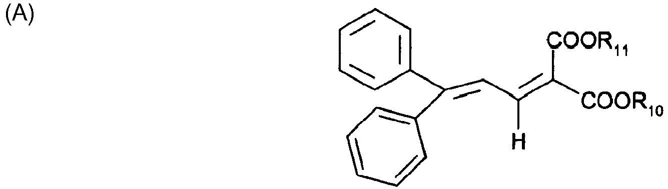

Die Verbindungen sind aus der EP-A-916 335 bekannt. Die Substituenten R¹⁰ und/oder R¹¹ bedeuten bevorzugt C₁- bis C₈-Alkyl und C₅- bis C₈-Cycloalkyl.

Zur Gruppe f.b) der Zimtsäureester zählen beispielsweise 4-Methoxyzimtsäure-2-isoamylester, 4-Methoxyzimtsäure-2-ethylhexylester, Methyl-α-methoxycarbonylcinnamat, Methyl-α-cyano-β-methyl-p-methoxycinnamat, Butyl-α-cyano-β-methyl-p-methoxy-cinnamat und Methyl-α-methoxycarbonyl-p-methoxycinnamat.

Zur Gruppe f.c) der Benzotriazole zählen beispielsweise 2-(2'-Hydroxyphenyl)-benzotriazole wie 2-(2'-Hydroxy-5'-methylphenyl)-benzotriazol, 2-(3',5'-Di-tert.-butyl-2'-hydroxyphenyl)benzotriazol, 2-(5'-tert.-Butyl-2'-hydroxyphenyl)-benzotriazol, 2-(2'-Hydroxy-5'-(1,1,3,3-tetramethylbutyl)phenyl)benzotriazol, 2-(3',5'-Di-tert.-butyl-2'-hydroxyphenyl)-5-chlorbenzotriazol, 2-(3'-tert.-Butyl-2'-hydroxy-5'-methylphenyl)-5-chlor-benzotriazol, 2-(3'-sec.-Butyl-5'-tert.-butyl-2'-hydroxyphenyl)-benzotriazol, 2-(2'-Hydroxy-4'-octyloxyphenyl)-benzotriazol, 2-(3',5'-Di-tert.-amyl-2'-hydroxyphenyl)-benzotriazol, 2-(3',5'-Bis-(α,α-dimethylbenzyl)-2'-hydroxyphenyl)-benzotriazol , 2-(3'-tert.-Butyl-2'-hydroxy-5'-(2-octyloxycarbonylethyl)phenyl)-5-chlor-benzotriazol, 2-(3'-tert.-Butyl-5'-[2-(2-ethylhexyloxy)-carbonylethyl]-2'-hydroxyphenyl)-5-chlorbenzotriazol,
2-(3'-tert.-Butyl-2'-hydroxy-5'-(2-methoxycarbonylethyl)phenyl)-5-chlorbenzotriazol, 2-(3'-tert.-Butyl-2'-hydroxy-5'-(2-methoxycarbonylethyl)phenyl)benzotriazol, 2-(3'-tert.-Butyl-2'-hydroxy-5'-(2-octyloxycarbonylethyl)phenyl)benzotriazol, 2-(3'-tert.-Butyl-5'-[2-(2-ethylhexyloxy)carbonylethyl]-2'-hydroxyphenyl)benzotriazol, 2-(3'-Dodecyl-2'-hydroxy-5'-methylphenyl)-benzotriazol und 2-(3'-tert.-Butyl-2'-hydroxy-5'-(2-isooctyloxycarbonylethyl)-phenylbenzotriazol, 2,2'-Methylen-bis[4-(1,1,3,3-tetramethylbutyl)-6-benzotriazol-2-yl-phenol]; das Produkt der Veresterung von 2-[3'-tert.-Butyl-5'-(2-methoxycarbonylethyl)-2'-hydroxyphenyl]-2H-benzotriazol mit Polyethylenglycol 300; [R-CH₂CH₂-COO(CH₂)₃]₂, mit R = 3'-tert.-Butyl-4'-hydroxy-5'-2H-benzotriazol-2-yl-phenyl oder deren Gemische.

Zur Gruppe f.d) der Hydroxybenzophenone zählen beispielsweise 2-Hydroxybenzophenone wie 2-Hydroxy-4-methoxybenzophenon, 2,2'-Dihydroxy-4-methoxybenzophenon, 2,4-Dihydroxybenzophenon, 2,2',4,4'-Tetrahydroxybenzophenon, 2,2'-Dihydroxy-4,4'-dimethoxybenzophenon, 2,2'-Dihydroxy-4,4'-dimethoxybenzophenon, 2-Hydroxy-4-(2-ethylhexyloxy)benzophenon, 2-Hydroxy-4-(n-octyloxy)benzophenon, 2-Hydroxy-4-methoxy-4'-methylbenzophenon, 2-Hydroxy-3-carboxybenzophenon, 2-Hydroxy-4-methoxybenzophenon-5-sulfonsäure und deren Natriumsalz, 2,2'-Dihydroxy-4,4'-dimethoxybenzophenon-5,5'-bissulfonsäure
und deren Natriumsalz.

Zur Gruppe f.e) der Diphenylcyanacrylate zählen beispielsweise Ethyl-2-cyan-3,3-diphenylacrylat, das beispielsweise im Handel unter dem Namen Uvinul® 3035 der BASF SE erhältlich ist, 2-Ethylhexyl-2-cyan-3,3-diphenylacrylat, das beispielsweise im Handel als Uvinul® 3039 der BASF SE erhältlich ist und 1,3-Bis-[(2'-cyano-3',3'-diphenylacryloyl)oxy]-2,2-bis{(2'-cyano-3',3'-diphenylacryloyl)oxy]methyl}propan, das beispielsweise im Handel unter dem Namen Uvinul® 3030 der BASF SE erhältlich ist.

Zur Gruppe f.f) der Oxamide zählen beispielsweise 4,4'-Dioctyloxyoxanilid, 2,2'-Diethoxyoxanilid, 2,2'-Dioctyloxy-5,5'-di-tert.-butyloxanilid, 2,2'-Didodecyloxy-5,5'-di-tert.-butyloxanilid, 2-Ethoxy-2'-ethyloxanilid, N,N'-Bis(3-dimethylaminopropyl)oxamid, 2-Ethoxy-5-tert.-butyl-2'-ethyloxanilid und dessen Mischung mit 2-Ethoxy-2'-ethyl-5,4'-di-tert.-butyloxanilid sowie Mischungen von ortho-, para-Methoxy-disubstituierten Oxaniliden und Mischungen von ortho- und para-Ethoxy disubstituierten Oxaniliden.

Zur Gruppe f.g) der 2-Phenyl-1,3,5-triazine zählen beispielsweise 2-(2-Hydroxyphenyl)-1,3,5-triazine wie 2,4,6-Tris(2-hydroxy-4-octyloxyphenyl)-1,3,5-triazin, 2-(2-Hydroxy-4-octyloxyphenyl)-4,6-bis(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4, 6-bis(4-methylphenyl)-1,3,5-triazin, 2-(2-Hydroxy-4-dodecyloxyphenyl)-4,6-bis(2,4-dimethylphenyl)-1,3,5-triazin, 2-(2-Hydroxy-4-tridecyloxyphenyl)-4, 6-bis(2,4-dimethylphenyl)-1,3,5-triazin, 2-[2-Hydroxy-4-(2-hydroxy-3-butyloxy-propoxy)-phenyl]-4, 6-bis(2,4-dimethylphenyl)-1,3,5-triazin, 2-[2-Hydroxy-4-(2-hydroxy-3-octyloxy-propoxy)phenyl]-4,6-bis(2,4-dimethylphenyl)-1,3,5-triazin, 2-[4-(Dodecyloxy/tridecyloxy-2-hydroxypropoxy)-2-hydroxyphenyl]-4,6-bis(2,4-dimethylphenyl)-1,3,5-triazin, 2-[2-Hydroxy-4-(2-hydroxy-3-dodecyloxy-propoxy)phenyl]-4,6-bis-(2,4-dimethylphenyl)-1,3,5-triazin, 2-(2-Hydroxy-4-hexyloxyphenyl)-4,6-diphenyl-1,3,5-triazin, 2-(2-Hydroxy-4-methoxyphenyl)-4,6-d iphenyl-1,3,5-triazin, 2,4,6-Tris[2-hydroxy-4-(3-butoxy-2-hydroxy-propoxy)phenyl]-1,3,5-triazin und 2-(2-Hydroxyphenyl)-4-(4-methoxyphenyl)-6-phenyl-1,3,5-triazin.

Die Gruppe f.h) der Antioxidantien umfasst beispielsweise: Alkylierte Monophenole wie beispielsweise 2,6-Di-tert.-butyl-4-methylphenol, 2-tert.-Butyl-4,6-dimethylphenol, 2,6-Di-tert.-butyl-4-ethylphenol, 2,6-Di-tert.-butyl-4-n-butylphenol, 2,6-Di-tert.-butyl-4-isobutylphenol, 2,6-Dicyclopentyl-4-methylphenol, 2-(α-Methylcyclohexyl)-4,6-dimethylphenol, 2,6-Dioctadecyl-4-methylphenol, 2,4,6-Tricyclohexylphenol,
2,6-Di-tert.-butyl-4-methoxymethylphenol, unverzweigte oder in der Seitenkette verzweigte Nonylphenole wie beispielsweise 2,6-Di-nonyl-4-methylphenol, 2,4-Dimethyl-6-(1-methylundec-1-yl)-phenol, 2,4-Dimethyl-6-(1-methylheptadec-1-yl)-phenol, 2,4-Dimethyl-6-(1-methyltridec-1-yl-)phenol oder deren Gemische.

Alkylthiomethylphenole wie zum Beispiel 2,4-Dioctylthiomethyl-6-tert.-butylphenol, 2,4-Dioctylthiomethyl-6-methylphenol, 2,4-Dioctylthiomethyl-6-ethylphenol, 2,6-Didodecylthiomethyl-4-nonylphenol.

Hydrochinone und alkylierte Hydrochinone wie zum Beispiel 2,6-Di-tert.-butyl-4-methoxyphenol, 2,5-Di-tert.-butylhydrochinon, 2,5-Di-tert.-amylhydrochinon, 2,6-Diphenyl-4-octadecyloxyphenol, 2,6-Di-tert.-butylhydrochinon, 2,5-Di-tert.-butyl-4-hydroxyanisol, 3,5-Di-tert.-butyl-4-hydroxyanisol, 3,5-Di-tert.-butyl-4-ydroxyphenylstearat, Bis-(3,5-di-tert.-butyl-4-hydroxyphenyl)adipat.

Tocopherole, wie zum Beispiel α-Tocopherol, β-Tocopherol, γ-Tocopherol, δ-Tocopherol und Gemische davon (Vitamin E).

Hydroxylierte Thiodiphenylether wie zum Beispiel 2,2'-Thio-bis(6-tert.-butyl-4-methylphenol), 2,2'-Thio-bis(4-octylphenol), 4,4'-Thio-bis(6-tert.-butyl-3-methylphenyl), 4,4'-Thio-bis(6-tert.-butyl-2-methylphenol), 4,4'-Thio-bis-(3,6-di-sec.-amylphenol), 4,4'-Bis(2,6-dimethyl-4-hydroxyphenyl)disulfid.

Alkyliden-Bisphenole wie zum Beispiel 2,2'-Methylen-bis(6-tert-butyl-4-methylphenol), 2,2'-Methylen-bis(6-tert.-butyl-4-ethylphenol), 2,2'-Methylen-bis[4-methyl-6-(α-methylcyclohexyl)-phenol], 2,2'-Methylen-bis(4-methyl-6-cyclohexylphenol), 2,2'-Methylen-bis(6-nonyl-4-methylphenol), 2,2'-Methylen-bis(4,6-di-tert.-butylphenol), 2,2'-Ethyliden-bis(4,6-di-tert.-butylphenol), 2,2'-Ethyliden-bis(6-tert.-butyl-4-isobutylphenol), 2,2'-Methylen-bis[6-(a-methylbenzyl)-4-nonylphenol], 2,2'-Methylen-bis[6-(α,α-dimethylbenzyl)-4-nonylphenol], 4,4'-Methylen-bis(2,6-di-tert.-butylphenol), 4,4'-Methylen-bis(6-tert.-butyl-2-methylphenol), 1,1-Bis(5-tert.-butyl-4-hydroxy-2-methylphenyl)-butan, 2,6-Bis(3-tert.-butyl-5-methyl-2-hydroxybenzyl)-4-methylphenol, 1,1,3-Tris(5-tert.-butyl-4-hydroxy-2-methylphenyl)butan, 1,1-Bis(5-tert.-butyl-4-hydroxy-2-methylphenyl)-3-n-dodecylmercaptobutan, Ethylenglycol-bis-[3,3-bis(3-tert.-butyl-4-hydroxyphenyl)butyrat], Bis(3-tert.-butyl-4-hydroxy-5-methyl-phenyl)dicyclopentadien, Bis[2-(3'-tert.-butyl-2-hydroxy-5-methylbenzyl)-6-tert.-butyl-4-methylphenyl]terephthalat, 1,1-Bis-(3,5-dimethyl-2-hydroxyphenyl)butan, 2,2-Bis-(3,5-di-tert.-butyl-4-hydroxyphenylpropan, 2,2-Bis-(5-tert.-butyl-4-hydroxy-2-methylphenyl)-4-n-dodecylmercaptobutan, 1,1,5,5-Tetra-(5-tert.-butyl-4-hydroxy-2-methylphenyl)-pentan.

Benzylverbindungen wie zum Beispiel 3,5,3',5'-Tetra-tert.-butyl-4,4'-dihydroxydibenzylether, Octadecyl-4-hydroxy-3,5-dimethylbenzylmercaptoacetat, Tridecyl-4-hydroxy-3,5-di-tert.-butylbenzylmercaptoacetat, Tris(3,5-di-tert.-butyl-4-hydroxybenzyl)amin, 1,3,5-Tri-(3,5-di-tert.-butyl-4-hydroxybenzyl)-2,4,6-trimethylbenzol, Di-(3,5-di-tert.-butyl-4-hydroxybenzyl)sulfid, 3,5-Di-tert.-butyl-4-hydroxybenzyl-mercaptoessigsäureisooctylester, Bis-(4-tert.-butyl-3-hydroxy-2,6-dimethylbenzyl)dithiolterephthalat, 1,3,5-Tris-(3,5-di-tert.-butyl-4-hydroxybenzyl)-isocyanurat, 1,3,5-Tris-(4-tert.-butyl-3-hydroxy-2,6-dimethylbenzyl)isocyanurat, 3,5-Di-tert.-butyl-4-hydroxybenzylphosphorsäuredioctadecylester und 3,5-Di-tert.-butyl-4-hydroxybenzyl-phosphorsäuremonoethylester.

Hydroxybenzylierte Malonate wie zum Beispiel Dioctadecyl-2,2-bis-(3,5-di-tert.-butyl-2-hydroxybenzyl)-malonat, Di-octadecyl-2-(3-tert.-butyl-4-hydroxy-5-methylbenzyl)-malonat, Didodecylmercaptoethyl-2,2-bis-(3,5-d i-tert.-butyl-4-hydroxybenzyl)malonat, Bis[4-(1,1,3,3-tetramethylbutyl)phenyl]-2,2-bis(3,5-di-tert.-butyl-4-hydroxybenzyl)-malonat.

Hydroxybenzyl-Aromaten wie zum Beispiel 1,3,5-Tris-(3,5-di-tert.-butyl-4-hydroxybenzyl)-2,4,6-trimethylbenzol, 1,4-Bis(3,5-di-tert.-butyl-4-hydroxybenzyl)-2,3,5,6-tetramethylbenzol, 2,4,6-Tris(3,5-di-tert.-butyl-4-hydroxybenzyl)phenol.

Triazinverbindungen wie zum Beispiel 2,4-Bis(octylmercapto)-6-(3,5-di-tert.-butyl-4-hydroxyanilino)-1,3,5-triazin, 2-Octylmercapto-4,6-bis(3,5-di-tert.-butyl-4-hydroxyanilino)-1,3,5-triazin, 2-Octylmercapto-4,6-bis(3,5-di-tert.-butyl-4-hydroxyphenoxy)-1,3,5-triazin, 2,4,6-Tris(3,5-di-tert.-butyl-4-hydroxyphenoxy)-1,3,5-triazin, 1,3,5-Tris-(3,5-di-tert.-butyl-4-hydroxybenzyl)-isocyanurat, 1,3,5-Tris(4-tert.-butyl-3-hydroxy-2,6-dimethylbenzyl)-isocyanurat, 2,4,6-Tris(3,5-di-tert.-butyl-4-hydroxyphenylethyl)-1,3,5-triazin, 1,3,5-Tris(3,5-di-tert.-butyl-4-hydroxyphenylpropionyl)-hexahydro-1,3,5-triazin, 1,3,5-Tris(3,5-dicyclohexyl-4-hydroxybenzyl)-isocyanurat.

Benzylphosphonate wie zum Beispiel Dimethyl-2,5-di-tert.-butyl-4-hydroxybenzylphosphonat, Diethyl-3,5-di-tert.-butyl-4-hydroxybenzylphosphonat, ((3,5-Bis(1,1-dimethylethyl)-4-hydroxyphenyl)methyl-phosphonsäurediethylester), Dioctadecyl-3,5-di-tert.-butyl-4-hydroxybenzylphosphonat, Dioctadecyl-5-tert.-butyl-4-hydroxy-3-methylbenzylphosphonat, Calciumsalz des 3,5-Di-tert.-butyl-4-hydroxybenzylphosphonsäure-monoethylesters.

Acylaminophenole wie zum Beispiel 4-Hydroxy-laurinsäureanilid, 4-Hydroxystearinsäureanilid, 2,4-Bis-octylmercapto-6-(3,5-di-tert.-butyl-4-hydroxyanillno)-s-triazin und Octyl-N-(3,5-di-tert.-butyl-4-hydroxy-phenyl)-carbamat.

Ester der β-(3,5-Di-tert.-butyl-4-hydroxyphenyl)propionsäure mit ein- oder mehrwertigen Alkoholen wie z.B. mit Methanol, Ethanol, n-Octanol, iso-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis-(Hydroxyethyl)oxalsäurediamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan.

Ester der β-(5-tert.-Butyl-4-hydroxy-3-methylphenyl)propionsäure mit ein- oder mehrwertigen Alkoholen, wie z.B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethyl-englycol, Triethylenglycol, Pentaerythrit, Tris(hydroxyethyl)-isocyanurat, N,N'-Bis(hydroxyethyl)oxalsäurediamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan.

Ester der β-(3,5-Dicyclohexyl-4-hydroxyphenyl)propionsäure mit ein- oder mehrwertigen Alkoholen wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethyl-englycol, Pentaerythrit, Tris-(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6, 7-trioxabicyclo [2.2.2]octan.

Ester der 3,5-Di-tert-butyl-4-hydroxyphenylessigsäure mit ein- oder mehrwertigen Alkoholen, wie z.B. mit Methanol, Ethanol, Octanol, Octadecanol, 1,6-Hexandiol, 1,9-Nonandiol, Ethyl-englycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexanediol, Trimethylolpropan, 4-Hydroxymethyl-1-phospha-2,6,7-trioxabicyclo[2.2.2]octan.

Amide der β-(3,5-Di-tert.-butyl-4-hydroxyphenyl)propionsäure, wie z. B. N,N'-Bis(3,5-di-tert.-butyl-4-hydroxyphenylpropionyl)-hexamethylendiamin, N,N'-Bis(3,5-di-tert.-butyl-4-hydroxyphenylpropionyl)-trimethylendiamin, N,N'-Bis(3,5-di-tert.-butyl-4-hydroxyphenylpropionyl)-hydrazin, N,N'-Bis[2-(3-[3,5-di-tert.-butyl-4-hydroxyphenyl]-propionyloxy)ethyl]-oxamid (z.B. Naugard®XL-1 der Firma Uniroyal).

Aminische Antioxidantien, wie zum Beispiel N,N'-Di-isopropyl-p-phenylendiamin, N,N'-Di-sec.-butyl-p-phenylendiamin, N,N'-Bis(1,4-dimethylpentyl)-p-phenylendiamin, N,N'-Bis(1-ethyl-3-methylpentyl)-p-phenylendiamin, N,N'-Bis(1-methylheptyl)-p-phenylendiamin, N,N'-Dicyclohexyl-p-phenylendiamin, N,N'-Diphenyl-p-phenylendiamin, N,N'-Bis(2-naphthyl)-p-phenylendiamin, N-Isopropyl-N'-phenyl-p-phenylendiamin, N-(1,3-Dimethylbutyl)-N'-phenyl-p-phenylendiamin, N-( 1-Methylheptyl)-N'-phenyl-p-phenylendiamin, N-Cyclohexyl-N'-phenyl-p-phenylendiamin, 4-(p-Toluolsulfamoyl)diphenylamin, N,N'-Dimethyl-N,N'-di-sec.-butyl-p-phenylendiamin, Diphenylamin, N-Allyldiphenylamin, 4-Isopropoxydiphenylamin, N-Phenyl-1-naphthylamin, N-(4-tert.-Octylphenyl)-1-naphthylamin, N-Phenyl-2-naphthylamin, octyliertes Diphenylamin, z.B. p,p'-Di-tert.-octyldiphenylamin, 4-n-Butylaminophenol, 4-Butyrylaminophenol, 4-Nonanoylaminophenol, 4-Dodecanoylaminophenol, 4-Octadecanoylaminophenol, Bis-(4-methoxyphenyl)amin, 2,6-Di-tert.-butyl-4-dimethylaminomethylphenol, 2,4'-Diaminodiphenylmethan, 4,4'-Diaminodiphenylmethan, N,N,N',N'-Tetramethyl-4,4'-diaminodiphenylmethan, 1,2-Bis-[(2-methylphenyl)amino]ethan, 1,2-Bis(phenylamino)-propan, (o-Tolyl)-biguanid, Bis[4-(1',3'-dimethylbutyl)phenyl]amin, tert.-octyliertes N-Phenyl-1-naphthylamin, Gemisch aus mono- und dialkylierten tert-Butyl/tert-Octyldiphenylaminen, Gemisch aus mono- und dialkylierten Nonyldiphenylaminen, Gemisch aus mono- und dialkylierten Dodecyldiphenylaminen, Gemisch aus mono- und dialkylierten Isopropyl/Isohexyldiphenylaminen, Gemisch aus mono- und dialkylierten tert.-Butyldiphenylaminen, 2,3-Dihydro-3,3-dimethyl-4H-1,4-benzothiazin, Phenothiazin, Gemisch aus mono- und dialkylierten tert.-Butyl/tert.-Octyl-phenothiazinen, Gemisch aus mono-und dialkylierten tert-Octyl-phenothiazinen, N-Allylphenothiazin, N,N,N',N'-Tetraphenyl-1,4-diaminobut-2-en, N,N-Bis-(2,2,6,6-tetramethyl-piperidin-4-yl-hexamethylendiamin, Bis-(2,2,6,6-tetramethylpiperidin-4-yl)-sebacat, 2,2,6,6-Tetramethylpiperidin-4-on, 2,2,6,6 Tetramethylpiperidin-4-ol, das Dimethylsuccinat-Polymer mit 4-Hydroxy-2,2,6,6-tetramethyl-1-piperidinethanol [CAS-Nr. 65447-77-0], (beispielsweise Tinuvin® 622 der Fa. Ciba Specialty Chemicals, Schweiz), Polymer of
2,2,4,4-Tetramethyl-7-oxa-3,20-diaza-dispiro[5.1.11.2]-heeicosan-21-on und Epichlorhydrin [CAS-Nr.: 202483-55-4], beispielsweise (Hostavin®30 der Fa. Ciba Specialty Chemicals, Schweiz).

Zur Gruppe f.i) der sterisch gehinderten Amine gehören zum Beispiel 4-Hydroxy-2,2,6,6-tetramethylpiperidin, 1-Allyl-4-hydroxy-2,2,6,6-tetramethylpiperidin, 1-Benzyl-4-hydroxy-2,2,6,6-tetramethylpiperidin, Bis(2,2,6,6-tetramethyl-4-piperidyl)sebacat, Bis(2,2,6,6-tetramethyl-4-piperidyl)succinat, Bis(1,2,2,6,6-pentamethyl-4-piperidyl)sebacat, Bis(1-octyloxy-2,2,6,6-tetramethyl-4-piperidyl)sebacat, Bis(1,2,2,6,6-pentamethyl-4-piperidyl)-n-butyl-3,5-di-tert.-butyl-4-hydroxybenzylmalonat, (n-Butyl-3,5-di-tert.-butyl-4-hydroxy-benzyl-malonsäure-bis(1,2,2,6, 6-pentamethylpiperidyl)-ester), Kondensationsprodukt aus 1-(2-Hydroxyethyl)-2,2,6,6-tetramethyl-4-hydroxypiperidin und Bernsteinsäure, lineare oder cyclische Kondensationsprodukte aus N,N'-Bis(2,2,6,6-tetramethyl-4-piperidyl)hexamethylendiamin und 4-tert.-Octylamino-2,6-dichlor-1,3,5-triazin, Tris(2,2,6,6-tetramethyl-4-piperidyl)-nitrilotriacetat, Tetrakis(2,2,6,6-tetramethyl-4-piperidyl)-1,2,3,4-butan-tetracarboxylat, 1,1'-(1,2-Ethandiyl)-bis(3,3,5,5-tetramethylpiperazinon), 4-Benzoyl-2,2,6,6-tetramethylpiperidin, 4-Stearyloxy-2,2,6,6-tetramethylpiperidin, Bis-(1,2,2,6,6-pentamethylpiperidyl)-2-n-butyl-2-(2-hydroxy-3,5-di-tert.-butylbenzyl)malonat, 3-n-Octyl-7,7,9,9-tetramethyl-1,3,8-triazaspiro[4.5]decan-2,4-dion, Bis-(1-octyloxy-2,2,6,6-tetramethylpiperidy)-sebacat, Bis-(1-octyloxy-2,2,6,6-tetra methyl-piperidyl)-succinat, lineare oder cyclische Kondensationsprodukte von N,N'-Bis-(2,2,6,6-tetramethyl-4-piperidyl)hexamethylendiamin und 4-Morpholino-2,6-dichlor-1,3,5-triazin, Kondensationsprodukt von N,N'-Bis-(2,2,6,6-tetramethyl-4-piperidyl)hexamethylendiamin und Ameisensäureester (CAS-Nr. 124172-53-8, z.B. Uvinul® 4050H der BASF SE), Kondensationsprodukt von 2-Chlor-4,6-bis(4-n-butylamino-2,2,6,6-tetramethylpiperidyl)-1,3,5-triazin und 1,2-Bis(3-aminopropylamino)ethan, Kondensationsprodukt von 2-Chlor-4,6-di-(4-n-butylamino-1,2,2,6,6-pentamethylpiperidyl)-1,3,5-triazin und 1,2-Bis-(3-aminopropylamino)ethan, 8-Acetyl-3-dodecyl-7,7,9,9-tetramethyl-1,3,8-triazaspiro[4.5]decan-2,4-dion, 3-Dodecyl-1-(2,2,6,6-tetramethyl-4-piperidyl)pyrrolidin-2,5-dion, 3-Dodecyl-1-(1,2,2,6,6-pentamethyl-4-piperidyl)pyrrolidin-2,5-dion, Gemisch von 4-Hexadecyloxy- und 4-Stearyloxy-2,2,6,6-tetramethylpiperidin, Kondensationsprodukt aus N,N'-Bis(2,2,6,6-tetramethyl-4-piperidyl)hexamethylendiamin und 4-Cyclohexylamino-2,6-dichlor-1,3,5-triazin, Kondensationsprodukt aus 1,2-Bis(3-aminopropylamino)ethan und 2,4,6-Trichlor-1,3,5-triazin sowie 4-Butylamino-2,2,6,6-tetramethylpiperidin (CAS Nr. 136504-96-6), N-(2,2,6,6-Tetramethyl-4-piperidyl)-n-dodecylsuccinimid, N-(1,2,2,6,6-Pentamethyl-4-piperidyl)-n-dodecylsuccinimid, 2-Undecyl-7,7,9,9-tetramethyl-1-oxa-3,8-diaza-4-oxospiro[4,5]decan, Reaktionsprodukt von 7,7,9,9-Tetramethyl-2-cycloundecyl-1-oxa-3, 8-diaza-4-oxospiro[4,5]decan und Epichlorhydrin, 1,1-Bis(1,2,2,6,6-pentamethyl-4-piperidyloxycarbonyl )-2-(4-methoxyphenyl)ethen, N,N'-Bis-formyl-N, N'-bis(2,2,6,6-tetramethyl-4-piperidyl)hexamethylendiamin, Diester der 4-Methoxy-methylen-malonsäure mit 1,2,2,6,6-Pentamethyl-4-hydroxypiperidin,

Poly[methylpropyl-3-oxo-4-(2,2,6,6-tetramethyl-4-piperidyl)]siloxan, Reaktionsprodukt aus Maleinsäureanhydrid-α-Olefin-copolymer und 2,2,6,6-Tetramethyl-4-aminopiperidin oder 1,2,2,6,6-Pentamethyl-4-aminopiperidin, Copolymere aus (partiell) N-piperidi-4-yl substituiertem Maleinsäureimid und einem Gemisch von α-Olefinen wie z.B. Uvinul® 5050H (BASF SE), 1-(2-Hydroxy-2-methylpropoxy)-4-octadecanoyloxy-2,2,6,6-tetramethylpiperidin, 1-(2-Hydroxy-2-methylpropoxy)-4-hexadecanoyloxy-2,2,6,6-tetramethylpiperidin, das Reaktionsprodukt aus 1-Oxyl-4-hydroxy-2,2,6,6-tetramethylpiperidin und einem Kohlenstoffrest von tert.-Amylalkohol, 1-(2-Hydroxy-2-methylpropoxy)-4-hydroxy-2,2,6,6-tetramethylpiperidin, 1-(2-Hydroxy-2-methylpropoxy)-4-oxo-2,2,6,6-tetramethylpiperidin, Bis(1-(2-hydroxy-2-methylpropoxy)-2,2,6,6-tetramethylpiperidin-4-yl)sebacat, Bis(1-(2-hydroxy-2-methylpropoxy)-2,2,6,6-tetramethylpiperidin-4-yl)adipat, Bis(1-(2-hydroxy-2-methylpropoxy)-2,2,6,6-tetramethylpiperidin-4-yl)succinat, Bis(1-(2-hydroxy-2-methylpropoxy)-2,2,6,6-tetramethylpiperidin-4-yl)glutarat, 2,4-bis{N(1-(2-hydroxy-2-methylpropoxy)-2,2,6,6-tetramethylpiperidin-4-yl]-N-butylamino}-6-(2-hydroxyethylamino)-s-triazin, N,N'-Bis-formyl-N,N'-bis(1,2,2,6,6-pentamethyl-4-piperidyl)-hexamethylendiamin, Hexahydro-2, 6-bis(2,2,6,6-tetramethyl-4-piperidyl)-1H,4H,5H,8H-2,3a,4a,6,7a,8a-hexaazacyclopenta[def]fluoren-4,8-dion (z.B. Uvinul® 4049 der BASF SE), Poly[[6-((1,1,3,3-tetramethylbutyl)amino)-1,3,5-triazin-2,4-diyl[(2,2,6,6-tetramethyl-4-piperidinyl)imino]1,6-hexandiyl[(2,2,6,6-tetramethyl-4-piperidinyl)imino]]) [CAS Nr. 71878-19-8], N,N',N',N'-Tetrakis(4,6-bis(butyl-(N-methyl-2,2,6,6-tetramethylpiperidin-4-yl)-amino)triazin-2-yl)-4,7-diaza-decan-1,10-diamin (CAS Nr. 106990-43-6) (z.B. Chimassorb® 119 der Ciba Special-ty Chemicals, Schweiz).

Zur Gruppe f.j) der Metalldesaktivatoren gehören zum Beispiel N,N'-Diphenyloxalsäurediamid, N-Salicylal-N'-salicyloyl-hydrazin, N,N'-Bis(salicyloyl)hydrazin, N,N'-Bis(3,5-di-tert-butyl-4-hydroxyphenylpropionyl)hydrazin, 3-Salicyloylamino-1,2,4-triazol, Bis(benzyliden)-oxalyldihydrazid, Oxanilid, Isophthaloyldihydrazid, Sebacoylbisphenylhydrazid, N,N'-Diacetyladipinsäuredihydrazid, N,N'-Bis(salicyloyl)oxalsäuredihydrazid, N,N'-Bis(salicyloyl)thiopropionyldihydrazid.

Zur Gruppe f.k) der Phosphite und Phosphonite gehören zum Beispiel Triphenylphosphit, Diphenylalkylphosphite, Phenyldialkylphosphite, Tris(nonylphenyl)phosphit, Trilaurylphosphit, Trioctadecylphosphit, Distearylpentaerythritdiphosphit, Tris(2,4-di-tert.-butylphenyl)phosphit, Bisisodecylpentaerythritdiphosphit, Bis(2,4-di-tert.-butylphenyl)pentaerythritdiphosphit, Bis(2,6-di-tert.-butyl-4-methylphenyl)-pentaerythritdiphosphit, Diisodecyloxypentaerythritdiphosphit, Bis(2,4-di-tert.-butyl-6-methylphenyl)-pentaerythritdiphosphit, Bis(2,4,6-tris(tert.-butylphenyl)pentaerythritdiphosphit, Tristearylsorbittriphosphit, Tetrakis-(2,4-di-tert.-butylphenyl)-4,4'-biphenylendiphosphonit, 6-Isooctyloxy-2,4,8,10-tetra-tert.-butyl-dibenzo[d,f][1,3,2]dioxaphosphepin, 6-Fluor-2,4,8,10-tetra-tert.-butyl-12-methyl-dibenzo[d,g][1,3,2]dioxaphosphocin, Bis(2,4-di-tert.-butyl-6-methylphenyl)methylphosphit, Bis(2,4-di-tert.-butyl-6-methylphenyl)ethylphosphit, 2,2',2"-Nitrilo[triethyl-tris(3,3',5,5'-tetra-tert.-butyl-1,1'-biphenyl-2,2'-diyl)phosphit], 2-Ethylhexyl-(3,3',5,5'-tetra-tert.-butyl-1,1'-biphenyl-2,2'-diyl)phosphit.

Zur Gruppe f.l) der Hydroxylamine gehören zum Beispiel N,N-Dibenzylhydroxylamin, N,N-Diethylhydroxylamin, N,N-Dioctylhydroxylamin, N,N-Dilaurylhydroxylamin, N,N-Ditetradecylhydroxylamin, N,N-Dihexadecylhydroxylamin, N, N-Dioctadecylhydroxylamin, N-Hexadecyl-N-octadecyl hydroxylamin, N-Heptadecyl-N-octadecylhydroxylamin, N-Methyl-N-octadecylhydroxylamin und N,N-Dialkylhydroxylamin aus hydrierten Talgfettaminen.

Zur Gruppe f.m) der Nitrone gehören zum Beispiel N-Benzyl-a-phenylnitron, N-Ethyl-α-methylnitron, N-Octyl-α-heptylnitron, N-Lauryl-α-undecylnitron, N-Tetadecyl-α-tridecylnitron, N-Hexadecyl-α-pentadecylnitron, N-Octadecyl-α-heptadecylnitron, N-Hexad ecyl-α-heptadecylnitron, N-Ocatadecyl-α-pentadecylnitron, N-Heptadecyl-α-heptadecylnitron, N-Octadecyl-α-hexadecylnitron, N-Methyl-α-heptadecylnitron und Nitrone, abgeleitet von N,N-Dialkylhydroxylaminen hergestellt aus hydrierten Talkfettaminen.

Zur Gruppe f.n) der Aminoxide gehören zum Beispiel Aminoxidderivate wie sie in den US-A-5,844,029 und US-A-5,880,191 beschrieben sind, Didecylmethylaminoxid, Tridecylaminoxid, Tridodecylaminoxid und Trihexadecylaminoxid.

Zur Gruppe f.o) der Benzofuranone und Indolinone gehören zum Beispiel die in den US-A-4,325,863; US-A-4,338,244; US-A-5,175,312; US-A-5,216,052; US-A-5,252,643; in der DE-A-4316611; in der DE-A-4316622; in der DE-A-4316876; in der EP-A-589839 oder EP-A-591102 beschriebenen oder 3-[4-(2-Acetoxyethoxy)phenyl]-5,7-di-tert.-butyl-benzofuran-2-on, 5,7-Ditert.-butyl-3-[4-(2-stearoyloxyethoxy)phenyl]benzofuran-2-on, 3,3'-Bis[5,7-di-tert.-butyl-3-(4-[2-hydroxyethoxy]phenyl)benzofuran-2-on], 5,7-Di-tert.-butyl-3-(4-ethoxyphenyl)benzofuran-2-on, 3-(4-Acetoxy-3,5-dimethylphenyl)-5,7-di-tert.-butyl-benzofuran-2-on, 3-(3,5-Dimethyl-4-pivaloyloxyphenyl )-5,7-di-tert.-butyl-benzofuran-2-on, 3-(3,4-Dimethylphenyl)-5,7-di-tert.-butyl-benzofuran-2-on, Irganoxs® HP-136 der Firma Ciba Specialty Chemicals und 3-(2,3-Dimethylphenyl)-5,7-di-tert.-butyl-benzofuran-2-on.

Zur Gruppe f.p) der Thiosynergisten gehören zum Beispiel Dilaurylthiodipropionat oder Distearylthiodipropionat.

Zur Gruppe f.q) der peroxidzerstörende Verbindungen gehören zum Beispiel Ester der β-Thiodipropionsäure, zum Beispiel der Lauryl-, Stearyl-, Myristyl- oder Tridecylester, Mercaptobenzimidazol oder das Zinksalz des 2-Mercaptobenzimidazols, Zinkdibutyldithiocarbamat, Dioctadecyldisulfid, Pentaerythrit-tetrakis(β-dodecylmercapto)-propionat.

Geeignet sind dementsprechend fungizide Wirkstoffe, Insektizidwirkstoffe und Bakterizide, insbesondere:
Fungizide aus den folgenden Gruppen:
   - Dicarboximide wie Iprodion, Myclozolin, Procymidon, Vinclozolin;
   - Acylalanine wie Benalaxyl, Metalaxyl, Ofurace, Oxadixyl;
   - Aminderivate wie Aldimorph, Dodine, Dodemorph, Fenpropimorph, Fenpropidin, Guazatine, Iminoctadine, Spiroxamin, Tridemorph;
   - Anilinopyrimidine wie Pyrimethanil, Mepanipyrim oder Cyprodinil;
   - Antibiotika wie Cycloheximid, Griseofulvin, Kasugamycin, Natamycin, Polyoxin und Streptomycin;
   - Azole (Conazole) wie Azaconazol, Bitertanol, Bromoconazol, Cyproconazol, Dichlobutrazol, Difenoconazole, Diniconazol, Epoxiconazol, Fenbuconazol, Fluquinconazol, Flusilazol, Flutriafol, Ketoconazol, Hexaconazol, Imazalil, Metconazol, Myclobutanil, Penconazol, Propiconazol, Prochloraz, Prothioconazol, Tebuconazol, Tetraconazol, Triadimefon, Triadimenol, Triflumizol, Triticonazol;
   - Dithiocarbamate: Ferbam, Nabam, Maneb, Mancozeb, Metam, Metiram, Propineb, Polycarbamat, Thiram, Ziram, Zineb;
   - Heterocylische Verbindungen wie Anilazin, Benomyl, Boscalid, Carbendazim, Carboxin, Oxycarboxin, Cyazofamid, Dazomet, Dithianon, Famoxadon, Fenamidon, Fenarimol, Fuberidazol, Flutolanil, Furametpyr, Isoprothiolan, Mepronil, Nuarimol, Probenazol, Proquinazid, Pyrifenox, Pyroquilon, Quinoxyfen, Silthiofam, Thiabendazol, Thifluzamid, Thiophanat-methyl, Tiadinil, Tricyclazol, Triforine;
   - Nitrophenylderivative wie Binapacryl, Dinocap, Dinobuton, Nitrophthal-isopropyl;
   - Phenylpyrrole wie Fenpiclonil sowie Fludioxonil;
   - 2-Methoxybenzophenone, wie sie in EP-A 897904 durch die allgemeine Formel 1 beschrieben werden, z.B. Metrafenon;
   - nicht klassifizierte Fungizide wie Acibenzolar-S-methyl, Benthiavalicarb, Carpropamid, Chlorothalonil, Cymoxanil, Diclomezin, Diclocymet, Diethofencarb, Edifenphos, Ethaboxam, Fenhexamid, Fentin-Acetat, Fenoxanil, Ferimzone, Fluazinam, Fosetyl, Fosetyl-Aluminum, Iprovalicarb, Hexachlorobenzol, Metrafenon, Pencycuron, Propamocarb, Phthalide, Toloclofos-Methyl, Quintozene, Zoxamid;
   - Strobilurine, wie sie in der WO-A-03/075663 durch die allgemeine Formel 1 beschrieben werden, z. B.: Azoxystrobin, Dimoxystrobin, Fluoxastrobin, Kresoximmethyl, Metominostrobin, Orysastrobin, Picoxystrobin, Pyraclostrobin und Trifloxystrobin;
   - Sulfensäurederivate wie Captafol, Captan, Dichlofluanid, Folpet, Tolylfluanid;
   - Zimtsäureamide und Analoga wie Dimethomorph, Flumetover, Flumorph;
   - 6-Aryl-(1,2,4]triazolo[1,5-a]pyrimidine wie sie z.B. in WO-A-98/46608, WO-A- 99/,41255 oder WO-A-03/004465 jeweils durch die allgemeine Formel 1 beschrieben werden;
   - Amidfungizide wie Cyflufenamid sowie (Z)-N-[α-(Cyclopropyl methoxyimino)-2, 3-difluoro-6-(difluoromethoxy)benzyl]-2-phenylacetamid;
   - lodverbindungen wie Diiodmethyl-p-tolylsulfon, 3-lod-2-propinylalkohol, 4-Chlorphenyl-3-iodpropargylformal, 3-Brom-2,3-diiod-3-propenylethylcarbonat, 2,3,3-Triiodallylalkohol, 3-Brom-2,3-diiod-2-propenylalkohol, 3-lod-2-propinyl-n-butylcarbamat, 3-lod-2-propinyl-n-hexylcarbamat, 3-lod-2-propinylphenylcarbamat, o-1-(6-Iod-3-oxohex-5-inyl )butylcarbamat, o-1-(6-Iod-3-oxohex-5-inyl )phenylcarbamat, Napcocide;
   - Phenolderivate wie Tribromphenol, Tetrachlorphenol, 3-Methyl-4-chlorphenol, Dichlorophen, o-Phenylphenol, m-Phenylphenol, 2-Benzyl-4-chlorphenol;
   - Isothiazolinone wie N-Methylisothiazolin-3-on, 5-Chlor-N-methylisothiazolin-3-on, 4 ,5-Dichlor-N-octylisothiazolin-3-on, N-Octyl-isothiazolin-3-on;
   - (Benz)isothiazolinone wie 1,2-Benzisothiazol-3(2H)on, 4,5-Dimethylisothiazol-3-on, 2-0ctyl-2H-isothiazol-3-on;
   - Pyridine wie 1-Hydroxy-2-pyridinthion (und ihre Na-, Fe-, Mn-, Zn-Salze), Tetrachlor-4-methylsulfonylpyridin;
   - Metallseifen wie Zinn-, Kupfer-, Zinknaphthenat, -octat, -2-ethylhexanoat, -oleat, - phosphat, -benzoat;
   - Organozinnverbindungen, z.B. Tributyl(TBT)zinnverbindungen wie Tributylzinn und Tributyl(mononapthenoyloxy)zinnderivate;
   - Dialkyldithiocarbamat und die Na- und Zn-Salze von Dialkyldithiocarbamaten, Tetramethylthiouramdisulfid;
   - Nitrile wie 2,4,5,6-Tertrachlorisophthalodinitril;
   - Benzthiazole wie 2-Mercaptobenzothiazol;
   - Chinoline wie 8-Hydroxychinolin und deren Cu-Salze;
   - Tris-N-(cyclohexyldiazeniumdioxy)-aluminium, N-(Cyclohexyldiazeniumdioxy)-tri butylzinn, Bis-N-(cyclohexyldiazeniumdioxy)-kupfer;
   - 3-Benzo(b)thien-2-yl-5,6-dihydro-1,4,2-oxathiazin-4-oxid (Bethoxazin).
Insektizide aus den folgenden Gruppen:
   - Organophosphate wie Azinphos-methyl, Azinphos-ethyl, Chlorpyrifos, Chlorpyrifos-methyl, Chlorfenvinphos, Diazinen, Dimethylvinphos, Dioxabenzofos, Disulfoton, Ethion, EPN, Fenitrothion, Fenthion, Heptenophos, Isoxathion, Malathion, Methidathion, Methyl-Parathion, Paraoxon, Parathion, Phenthoate, Phosalone, Phosmet, Phorate, Phoxim, Pirimiphos-methyl, Profenofos, Prothiofos, Primiphos-ethyl, Pyraclofos, Pyridaphenthion, Sulprofos, Triazophos, Trichlorfon; Tetrachlorvinphos, Vamidothion;
   - Carbamate wie Alanycarb, Benfuracarb, Bendiocarb, Carbaryl, Carbofuran, Carbosulfan, Fenoxycarb, Furathiocarb, Indoxacarb, Methiocarb, Pirimicarb, Propoxur, Thiodicarb, Triazamate;
   - Pyrethroide wie Bifenthrin, Cyfluthrin, Cycloprothrin, Cypermethrin, Deltamethrin, Esfenvalerate, Ethofenprox, Fenpropathrin, Fenvalerate, Cyhalothrin, Lambda-Cyhalothrin, Permethrin, Silafluofen, Tau-Fluvalinate, Tefluthrin, Tralomethrin, alpha-Cypermethrin;
   - Arthropode Wachstumsregulatoren: a) Chitinsyntheseinhibitoren z.B. Benzoylharnstoffe wie Chlorfluazuron, Diflubenzuron, Flucycloxuron, Flufenoxuron, Hexaflumuron, Lufenuron, Novaluron, Teflubenzuron, Triflumuron; Buprofezin, Diofenolan, Hexythiazox, Etoxazole, Clofentazine; b) Ecdysone Antagonisten wie Halofenozid, Methoxyfenozid, Tebufenozid; c) Juvenoide wie Pyriproxyfen, Methoprene; d) Lipid-Biosyntheseinhibitoren wie Spirodiclofen;
   - Neonicotinoide wie Flonicamid, Clothianidin, Dinotefuran, Imidacloprid, Thiamethoxam, Nithiazin, Acetamiprid, Thiacloprid;
   - Weitere unklassifizierte Insektizide wie Abamectin, Acequinocyl, Amitraz, Azadirachtin, Bifenazate, Cartap, Chlorfenapyr, Chlordimeform, Cyromazine, Diafenthiuron, Diofenolan, Emamectin, Endosulfan, Fenazaquin, Formetanate, Formetanate-Hydrochlorid, Hydramethylnon, Indoxacarb, Piperonylbutoxid, Pyridaben, Pymetrozine, Spinosad, Thiamethoxam, Thiocyclam, Pyridalyl, Fluacyprim, Milbemectin, Spirosmesifen, Flupyrazofos, NCS 12, Flubendiamid, Bistrifluron, Benclothiaz, Pyrafluprole, Pyriprole, Amidoflumet, Flufenerin, Cyflumetofen, Lepimectin, Profluthrin, Dimefluthrin und Metaflumizone.

Als Bakterizide eignen sich z.B. Isothiazolone wie 1,2-Benzisothiazol-3(2H)-on (BIT), Mischungen von 5-Chlor-2-methyl-4-isothiazolin-3-on mit 2-Methyl-4-isothiazolin-3-on sowie 2-n-Octyl-4-isothiazolin-3-on (OIT), weiterhin Carbendazim, Chlorotoluron, 2,2-Dibrom-3-nitrilopropionamid (DBNPA), Fluometuron, 3-Iod-2-propynylbutylcarbamat (IPBC), Isoproturon, Prometryn, Propiconazole.

Als Dispergiermittel eignen sich beispielsweise anionische oder polymere Dispergiermittel. Es kommen sowohl anionisch modifizierte Polyurethane als auch anionische Homo- und Copolymere monoethylenisch ungesättigter Monomere in Betracht. Bei den anionischen Gruppen kann es sich um Phosphat-, Phosphonat-, Carboxylat- oder Sulfonat-Gruppen handeln, wobei diese Gruppen auch in der Säureform vorliegen können. Sofern die Säuregruppen in neutralisierter Form vorliegen, weisen diese Polymere entsprechende Gegenionen auf. Typische Gegenionen sind die Kationen von Alkalimetallen wie Natrium, Kalium oder Lithium sowie Ammonium oder protonierte primäre, sekundäre oder tertiäre Amine.

Gemäß einer ersten bevorzugten Ausführungsform handelt es sich bei dem anionischen Dispergiermittel um ein Homo- oder Copolymerisat monoethylenisch ungesättigter Carbonsäuren, insbesondere ein Homo- oder Copolymerisat monoethylenisch ungesättigter Monocarbonsäuren und/oder ethylenisch ungesättigter Dicarbonsäuren, die zusätzlich als Comonomere neutrale Vinylmonomere einpolymerisiert enthalten können, oder um deren Alkoxylierungsprodukte einschließlich den Salzen.

Beispiele für die carboxylgruppenhaltigen monoethylenisch ungesättigten Monomere sind
- Monocarbonsäuren wie Acrylsäure, Methacrylsäure und Crotonsäure;
- Dicarbonsäuren wie Maleinsäure, Maleinsäurenanhydrid, Maleinsäuremonoester, Maleinsäuremonoamide, Umsetzungsprodukte von Maleinsäure mit Diaminen, die zu aminoxidgruppenhaltigen Derivaten oxidiert sein können, und Fumarsäure, wobei Maleinsäure, Maleinsäureanhydrid und Maleinsäuremonoamide bevorzugt sind.

Geeignete neutrale Comonomere sind insbesondere monoethylenisch ungesättigte neutrale Monomere, z.B.:
- Vinylaromaten, wie Styrol, Methylstyrol und Vinyltoluol;
- Olefine und Diene, wie Ethylen, Propylen, Isobuten, Diisobuten und Butadien;
- Vinylether, wie Polyethylenglykolmonovinylether und Octadecylvinylether;
- Vinylester linearer oder verzweigter aliphatischer Monocarbonsäuren, wie Vinylacetat, Vinylpropionat, Vinyllaurat, Vinylstearat und Vinylversatate;
- Alkylester, Cycloalkylester und Arylester monoethylenisch ungesättigter Monocarbonsäuren, insbesondere Acrylsäure- und Methacrylsäureester, wie Methyl-, Ethyl-, Propyl-, Isopropyl-, Butyl-, Pentyl-, Hexyl-, 2-Ethylhexyl-, Nonyl-, Lauryl- und Hydroxyethyl-(meth)acrylat sowie Phenyl-, Naphthyl- und Benzyl(meth)acrylat;
- Dialkylester von monoethylenisch ungesättigten Dicarbonsäuren, wie Dimethyl-, Diethyl-, Dipropyl-, Di-isopropyl-, Dibutyl-, Dipentyl-, Dihexyl-, Di-2-ethylhexyl-, Dinonyl-, Dilauryl-und Di-2-hydroxyethylmaleinat und -fumarat; Vinylpyrrolidon;
- Acrylnitril und Methacrylnitril, wobei Styrol, Isobuten, Diisobuten, Acrylsäureester und Polyethylenglykolmonovinylether, bevorzugte Comonomere sind.

Als Beispiele für bevorzugte Homopolymerisate sind insbesondere Polyacrylsäuren zu nennen.

Die Copolymerisate der genannten Monomere können aus zwei oder mehreren, insbesondere drei verschiedenen Monomeren aufgebaut sein. Es können statistische Copolymerisate, alternierende Copolymerisate, Blockcopolymerisate und Pfropfcopolymerisate vorliegen. Als bevorzugte Copolymerisate seien Styrol/Acrylsäure-, Acrylsäure/-Maleinsäure-, Acrylsäure/Methacrylsäure-, Butadien/Acrylsäure-, Isobuten/Maleinsäure-, Diisobuten/Maleinsäure- und Styrol/Maleinsäure-Copolymerisate, die jeweils als zusätzliche Monomerbestandteile Acrylsäureester und/oder Maleinsäureester enthalten können, genannt.

Vorzugsweise liegen die Carboxylgruppen der nicht alkoxylierten Homo- und Copolymerisate zumindest teilweise in Salzform vor, um Wasserlöslichkeit zu gewährleisten. Geeignet sind beispielsweise die Alkalimetallsalze, wie Natrium- und Kaliumsalze, und die Ammoniumsalze.

Üblicherweise weisen die nicht alkoxylierten Dispergiermittel mittlere Molekulargewichte M_{w} von 1.000 bis 250.000 auf (Massenmittel). Die für die einzelnen Polymerisate besonders geeigneten Molekulargewichtsbereiche hängen naturgemäß von deren Zusammensetzung ab. Im Folgenden werden für verschiedene Polymerisate beispielhaft Molekulargewichtsangaben gemacht: Polyacrylsäuren: M_{w} von 900 bis 250.000; Styrol/ Acrylsäure-Copolymerisate: Mw von 1.000 bis 50.000; Acrylsäure/Methacrylsäure-Copolymerisate: M_{w} von 1.000 bis 250.000; Acrylsäure/Maleinsäure-Copolymerisate: M_{w} von 2.000 bis 70.000.

Neben diesen Homo- und Copolymerisaten selbst sind auch ihre Alkoxylierungsprodukte als anionische polymere Dispergiermittel geeignet und bevorzugt. Hierunter versteht man vor allem die teilweise mit Poly-C₂- bis C₃-alkylenetheralkoholen veresterten Polymerisate. In der Regel beträgt der Veresterungsgrad dieser Polymerisate 30 bis 80 mol-%.

Für die Veresterung geeignet sind insbesondere die Poly- C₂- bis C₃-alkylenetheralkohole selbst, vorzugsweise Polyethylenglykole und Polyethylen/propylenglykole, sowie deren einseitig endgruppenverschlossene Derivate, vor allem die entsprechenden Monoether, wie Monoarylether, z.B. Monophenylether, und insbesondere Mono-C₁ bis -C₂₆-alkylether, z.B. mit Fettalkoholen veretherte Ethylen- und Propylenglykole, und die Polyetheramine, die z.B. durch Umwandlung einer terminalen OH-Gruppe der entsprechenden Polyetheralkohole oder durch Poly-addition von Alkylenoxiden an vorzugsweise primäre aliphatische Amine herstellbar sind. Bevorzugt sind dabei Polyethylenglykole, Polyethylenglykolmonoether und Polyetheramine. Die mittleren Molekulargewichte Mₙ der verwendeten Polyetheralkohole und ihrer Derivate liegen üblicherweise bei 200 bis 10.000.

Derartige an ionische oberflächenaktive Additive sind ebenfalls bekannt und im Handel z.B. unter den Namen Sokalan® (BASF SE), Joncryl® (Johnson Polymer), Alcosperse® (Alco), Geropon® (Rhodia), Good-Rite® (Goodrich), Neoresin® (Avecia), Orotan® und Morez® (Rohm & Haas), Disperbyk® (Byk) sowie Tegospers® (Goldschmidt) erhältlich.

In einer weiteren bevorzugten Ausführungsform enthält die wasserbasierte Zusammensetzung eines dispergierten Effektstoffs wenigstens ein Dispergiermittel auf Basis von wasserlöslichen bzw. wasserdispergierbaren Polyurethanen, insbesondere auf Basis eines Polyetherurethans, das nichtionisch oder anionisch modifiziert ist. Hierunter versteht man wasserlösliche bzw. wasserdispergierbare Umsetzungsprodukte von mehrwertigen Isocyanaten, z.B. Di- oder Triisocyanaten, mit polyfunktionellen, insbesondere difunktionellen, Isocyanat-reaktiven Verbindungen, die gegebenenfalls anionische Gruppen, insbesondere Carboxylgruppen aufweisen. Das Molekulargewicht der wasserlöslichen/wasserdispergierbaren Polyurethane liegt typischerweise im Bereich von 1.000 bis 250.000 (Massenmittel).

Als mehrwertige Isocyanate eignen sich insbesondere Diisocyanate, die auch in Kombination mit Verbindungen mit drei oder vier Isocyanatgruppen eingesetzt werden können.

Als Beispiele für bevorzugte mehrwertige Isocyanate sind: 2,4-Toluylendiiso-cyanat (2,4-TDI), 4,4'-Diphenylmethandiisocyanat (4,4'-MDI), para-Xylylendiisocyanat, 1,4-Diisocyanatobenzol, Tetramethylxylylendiisocyanat (TMXDI), 2,4'-Diphenylmethandiisocyanat (2,4'-MDI) und Triisocyanatotoluol sowie Isophorondiisocyanat (IPDI), 2-Butyl-2-ethylpentamethylendiisocyanat, Tetramethylendiisocyanat, Hexamethylendiisocyanat, Dodecamethylendiisocyanat, 2,2-Bis(4-isocyanatocyclohexyl)propan, Trimethylhexandiisocyanat, 2-Isocyanatopropylcyclohexylisocyanat, 2,4,4- und 2,2,4-Trimethylhexamethylendiisocyanat, 2,4'-Methylenbis(cyclohexyl)diisocyanat, cis-Cyclohexan-1,4-diisocyanat, trans-Cyclohexan-1,4-diisocyanat und 4-Methylcyclohexan-1,3-diisocyanat (H-TDI) und deren Mischungen.

Als isocyanatreaktive organische Verbindungen eignen sich grundsätzlich alle Verbindungen mit wenigstens zwei funktionellen Gruppen, die mit Isocyanatgruppen unter Bindungsbildung reagieren, z.B. Hydroxylgruppen, primäre Aminogruppen und SH-Gruppen. Bevorzugte Verbindungen isocyanatreaktive Verbindungen weisen zwei Hydroxylgruppen pro Molekül auf.

Diisocyanatreaktiven organischen Verbindungen können auch in Kombination mit Verbindungen isocyanatreaktiven organischen Verbindungen eingesetzt werden, die nur eine isocyanatreaktive Gruppe, z.B. eine Hydroxylgruppe pro Molekül aufweisen.

Beispiele für Verbindungen RI sind Polyetherdiole, Polyesterdiole, Polylactondiole (Polyesterdiole auf Lactonbasis), Polycarbonat-Diole, Diole und Triole mit bis zu 12C-Atomen, Dihydroxycarbonsäuren, Dihydroxysulfonsäuren, Dihydroxyphosphonsäuren und Polycarbonatdiole.

Geeignete Polyetherdiole sind beispielsweise Homo- und Copolymerisate von C₂- bis C₄-Alkylenoxiden, wie Ethylenoxid, Propylenoxid und Butylenoxid, Tetrahydrofuran, Styroloxid und/oder Epichlorhydrin. Bevorzugte Polyetherdiole sind Polyethylenglykol, Polypropylenglykol, Poly(ethylenozid-co-propylenoxid) Polybutylenglykol und Polytetrahydrofuran. Das Molekulargewicht Mₙ der Polyetherdiole beträgt bevorzugt 250 bis 5.000, besonders bevorzugt 500 bis 2.500.

Als Polyesterdiole kommen insbesondere OH-terminierte Umsetzungsprodukte von Diolen mit Dicarbonsäuren in Betracht. Beispiele für geeignete Dicarbonsäuren sind aliphatische Dicarbonsäuren mit vorzugsweise 3 bis 12 C-Atomen wie Bernsteinsäure, Glutarsäure, Adipinsäure, Korksäure, Azelainsäure, Sebacinsäure, 1,12-Dodecandicarbonsäure, Maleinsäure, Fumarsäure, Itaconsäure, sowie aromatische und cycloaliphatische Dicarbonsäuren wie Phthalsäure, Isophthalsäure, Terephthalsäure. Anstelle der Dicarbonsäuren können auch deren Ester, insbesondere deren Methylester, oder deren Anhydride, wie Maleinsäureanhydrid, Phthalsäureanhydrid, Tetrahydrophthalsäureanhydrid, Hexahydrophthalsäureanhydrid, Tetrachlorphthalsäureanhydrid oder endo-Methylentetrahydrophthalsäureanhydrid eingesetzt werden. Als Diole eignen sich insbesondere gesättigte und ungesättigte aliphatische und cycloaliphatische Diole. Die besonders bevorzugten aliphatischen α,ω-Diole sind unverzweigt und weisen 2 bis 12, insbesondere 2 bis 8, vor allem 2 bis 4 C-Atome auf. Bevorzugte cycloaliphatische Diole leiten sich von Cyclohexan ab. Beispiele für besonders geeignete Diele sind: Ethylenglykol, Propylenglykol, 1,3-Propandiol, 1,4-Butandiol, 2-Methylpropan-1,3-diol, 1,5-Pentandiol, Neopentylglykol, 1,6-Hexandiol, 1,8-0ctandiol, 1,10-Decandiol, 1,12-Dodecandiol, cis- und trans-But-2-en-1,4-diol, 2-Butin-1,4-diol und cis- und trans-1,4-Di(hydroxymethyl)cyclohexan. Das Molekulargewicht Mₙ der Polyesterdiole liegt bevorzugt bei 300 bis 5.000.

Als isocyanatreaktive Verbindung RI geeignete Polyesterdiole auf Lactonbasis sind aliphatische, gesättigte unverzweigte ω-Hydroxycarbonsäuren mit 4 bis 22, bevorzugt 4 bis 8 C-Atomen, bevorzugt, z.B. die Umsetzungsprodukte von γ-Hydroxybuttersäure und δ-Hydroxy-valeriansäure.

Als isocyanatreaktive Verbindungen eignen sich weiterhin die vorgenanten Diole, insbesondere gesättigte und ungesättigte aliphatische und cycloaliphatische Diole, wobei dieselben Bevorzugungen wie oben gelten.

Ebenfalls als isocyanatreaktive organische Verbindungen geeignet sind Polyole mit mehr als 2 OH-Gruppen, z.B. Triole, die insbesondere 3 bis 12, vor allem 3 bis 8 C-Atome, aufweisen. Beispiel für ein besonders geeignetes Triol ist Trimethylolpropan.

Anionisch modifizierte Polyurethane weisen naturgemäß anionische Gruppen wie zu- vor erwähnt auf, insbesondere Carboxylgruppen. Derartige Gruppen werden in geeigneter Weise bei der Herstellung mittels isocyanatreaktiver Verbindungen, die zusätzlich wenigstens eine anionische Gruppe aufweisen, in das Polyurethan eingebaut. Geeignete Verbindungen dieses Typs sind Dihydroxycarbonsäuren, beispielsweise aliphatische gesättigte Dihydroxycarbonsäuren, die vorzugsweise 4 bis 14 C-Atome aufweisen. Ein besonders bevorzugtes Beispiel für diese Dihydroxycarbonsäuren ist Dimethylolpropionsäure (DMPA). Weiterhin eignen sich entsprechende Dihydroxysulfonsäuren und Dihydroxyphosphonsäuren, wie 2,3-Dihydroxypropanphosphonsäure.

Die Einführung an ionischer Gruppen in das Polyurethan kann auch durch Verwendung isocyanatreaktiver Verbindungen, die nur eine isocyanatreaktive Gruppe und wenigstens eine an ionische Gruppe aufweisen, erfolgen. Als Beispiele seien insbesondere aliphatische, cycloaliphatische, araliphatische oder aromatische Monohydroxycarbonsäuren und -sulfonsäuren genannt.

Die Dispergiermittel auf Polyurethanbasis werden durch Umsetzung der isocyanatreaktiven organischen Verbindungen und gegebenenfalls anionischer isocyantareaktiver Verbindungen hergestellt, wobei das Molverhältnis von Isocyanat-Gruppen zu Hydroxylgruppen in der Regel 2:1 bis 1:2, vorzugsweise 1,2:1 bis 1:1,2, beträgt. Insbesondere weist das anionische Polyurethan keine freien Isocyanatgruppen auf.

Derartige oberflächenaktive Polyurethane sind bekannt und im Handel z.B. unter den Namen Borchi®GEN SN95 (Borchers) erhältlich.

Bevorzugte wässrige Zubereitung des dispergierten Effektstoffs umfassen wenigstens ein an ionisches Dispergiermittel und/oder ein Polyurethan.

Es kann von Vorteil sein, wenn die wässrige Zubereitung des dispergierten Effektstoffs zusätzlich wenigstens eine weitere oberflächenaktive Substanz enthalten. Hierbei handelt es sich vorzugsweise um eine nichtionische, wasserlösliche oberflächenaktive Substanz mit einer Polyetherstruktur, insbesondere solche mit ein oder mehreren Polyethylenoxid-Gruppen. Geeignete Beispiele hierfür sind Homo- und Copolymere von C₂- bis C₄-Alkylenoxiden, insbesondere Polyethylenoxide, Polypropylenoxide, Poly(ethylenoxid-co-propylenoxid), Copolymere von C₂- bis C₄-Alkylenoxiden mit Styroloxid, insbesondere Blockcopolymere mit Polypropylenoxid und Polyethylenoxidblöcke oder Blockcopolymere mit Poly(phenylethylenoxid)- und Polyethylenoxidblöcke sowie
statistische Copolymerisate dieser Alkylenoxide.

Geeignet sind außerdem Poly- C₂- bis C₄-alkylenoxide, insbesondere Polyethylenoxide, Polypropylenoxid und Poly(ethylenoxid-co-propylenoxide), die durch Umsetzung entsprechender C₂-bis C₄-Alkylenoxide an mono- oder polyfunktionelle Startermoleküle, wie an gesättigte oder ungesättigte aliphatische und aromatische Alkohole, wie Phenol oder Naphthol, die ihrerseits jeweils durch Alkyl, insbesondere C₁- bis C₁₂-Alkyl, vorzugsweise C₄- bis C₁₂- bzw. C₁- bis C₄-Alkyl, substituiert sein können, gesättigte oder ungesättigte aliphatische und aromatische Amine, gesättigte oder ungesättigte aliphatische Carbonsäuren und Carbonsäureamide, hergestellt werden. Üblicherweise werden 1 bis 300 mol, bevorzugt 3 bis 150 mol, Alkylenoxid je mol Startermolekül eingesetzt.

Geeignete aliphatische Alkohole enthalten dabei in der Regel 6 bis 26 C-Atome, bevorzugt 8 bis 18 C-Atome, und können unverzweigt, verzweigt oder cyclisch aufgebaut sein. Als Beispiele seien Octanol, Nonanol, Decanol, Isodecanol, Undecanol, Dodecanol, 2-Butyloctanol, Tridecanol, Isotridecanol, Tetradecanol, Pentadecanol, Hexadecanol (Cetylalkohol), 2-Hexyldecanol, Heptadecanol, Octadecanol (Stearylalkohol), 2-Heptylundecanol, 2-Octyldecanol, 2-Nonyltridecanol, 2-Decyltetradecanol, Oleylalkohol und 9-Octadecenol sowie auch Mischungen dieser Alkohole, wie C₈/C₁₀-, C₁₃/C₁₅- und C₁₆/C₁₈-Alkohole, und Cyclopentanol und Cyclohexanol genannt. Von besonderem Interesse sind die gesättigten und ungesättigten Fettalkohole, die durch Fettspaltung und Reduktion aus natürlichen Rohstoffen gewonnen werden, und die synthetischen Fettalkohole aus der Oxosynthese. Die Alkylenoxidaddukte an diese Alkohole weisen üblicherweise mittlere Molekulargewichte Mₙ von 200 bis 5.000 auf.

Als Beispiele für die obengenannten aromatischen Alkohole seien neben unsubstituiertem Phenol und α- und β-Naphthol, Hexylphenol, Heptylphenol, Octylphenol, Nonylphenol, Isononylphenol, Undecylphenol, Dodecylphenol, Di- und Tributylphenol und Dinonylphenol genannt.

Geeignete aliphatische Amine entsprechen den oben aufgeführten aliphatischen Alkoholen. Besondere Bedeutung haben auch hier die gesättigten und ungesättigten Fettamine, die vorzugsweise 14 bis 20 C-Atome aufweisen. Als aromatische Amine seien beispielsweise Anilin und seine Derivate genannt.

Als aliphatische Carbonsäuren eignen sich insbesondere gesättigte und ungesättigte Fettsäuren, die bevorzugt 14 bis 20 C-Atome enthalten, und hydrierte, teilhydrierte und unhydrierte Harzsäuren sowie auch mehrwertige Carbonsäuren, z.B. Dicarbonsäuren, wie Maleinsäure.

Geeignete Carbonsäureamide leiten sich von diesen Carbonsäuren ab.

Neben den Alkylenoxidaddukten an die einwertigen Amine und Alkohole sind die Alkylenoxidaddukte an mindestens bifunktionelle Amine und Alkohole von ganz besonderem Interesse.

Als mindestens bifunktionelle Amine sind zwei- bis fünfwertige Amine bevorzugt, die insbesondere der Formel H₂N-(R¹-NR²)ₙH (R¹ = C₂- bis C₆-Alkylen; R² = Wasserstoff oder C₁- bis C₆-Alkyl; n = 1 bis 5, wobei n gleich oder verschieden sein kann) entsprechen. Im Einzelnen seien beispielhaft genannt: Ethylendiamin, Diethylentriamin, Triethylentetramin, Tetraethylenpentamin, Propylendiamin-1,3, Dipropylentriamin, 1,4,8-Triazaoctan, 1,5,8,12-Tetraazadodecan, Hexamethylendiamin, Dihexamethylentriamin, 1,6-Bis-(3-aminopropylamino)hexan und N-Methyldipropylentriamin und Polyethylenimin (Lupasol®-Marken der BASF SE), wobei Hexamethylendiamin und Diethylentriamin besonders bevorzugt sind und Ethylendiamin ganz besonders bevorzugt ist.

Vorzugsweise werden diese Amine zunächst mit Propylenoxid und anschließend mit Ethylenoxid umgesetzt. Der Gehalt der Blockcopolymerisate an Ethylenoxid liegt üblicherweise bei etwa 10 bis 90 Gew.-%.

Die Blockcopolymerisate auf Basis mehrwertiger Amine weisen in der Regel mittlere Molekulargewichte Mₙ von 1.000 bis 40.000, vorzugsweise 1.500 bis 30.000, auf.

Als mindestens bifunktionelle Alkohole sind zwei- bis fünfwertige Alkohole bevorzugt. Beispielsweise seien C₂- bis C₆-Alkylenglykole und die entsprechenden Di- und Polyalkylenglykole, wie Ethylenglykol, Propylenglykol-1,2 und -1,3, Butylenglykol-1,2 und -1,4, Hexylenglykol-1,6, Dipropylenglykol und Polyethylenglykol, Glycerin und Pentaerythrit genannt, wobei Ethylenglykol und Polyethylenglykol besonders bevorzugt und Propylenglykol und Dipropylenglykol ganz besonders bevorzugt sind.

Besonders bevorzugte Alkylenoxidaddukte an mindestens bifunktionelle Alkohole weisen einen zentralen Polypropylenoxidblock auf, gehen also von einem Propylenglykol oder Polypropylenglykol aus, das zunächst mit weiterem Propylenoxid und dann mit Ethylenoxid umgesetzt wird. Der Gehalt der Blockcopolymerisate an Ethylenoxid liegt üblicherweise bei 10 bis 90 Gew.-%.

Die Blockcopolymerisate auf Basis mehrwertiger Alkohole weisen im Allgemeinen mittlere Molekulargewichte Mₙ von 1.000 bis 20.000, vorzugsweise 1.000 bis 15.000, auf.

Derartige Alkylenoxidblockcopolymerisate sind bekannt und im Handel z.B. unter den Namen Tetronic® und Pluronic® (BASF SE) erhältlich.

Zu den nichtionischen oberflächenaktiven Substanzen zählen auch niedermolekulare Substanzen, welche typischerweise Molekulargewicht (Zahlenmittel) unterhalb 1.500 Dalton und häufig unterhalb 800 Dalton aufweisen und die im Folgenden auch als nichtionische Emulgatoren bezeichnet werden. Nichtionische Emulgatoren sind dem Fachmann bekannt, z.B. aus Ullmanns Encyclopedia of Industrial Chemistry, 5. Ed. on CD-ROM, Wiley-VCH, Weinheim 1997, Emulsifiers, Kapitel 7.

Beispiele nichtionische Emulgatoren sind insbesondere ethoxilierte C₈- bis C₂₀-Alkanole mit Ethoxilierungsgraden im Bereich von 3 bis 50 und speziell 5 bis 30 sowie ethoxilierte C₄- bis C₂₀-Alkylphenole mit Ethoxilierungsgraden im Bereich von 3 bis 50 und speziell 5 bis 30.

Daneben können die oberflächenaktiven Substanzen in untergeordneter Menge auch niedermolekulare anionische Emulgatoren umfassen. Hierzu zählen insbesondere Emulgatoren auf der Basis von sauren Phosphorsäure-, Phosphonsäure-, Schwefelsäure- und/oder Sulfonsäureestern von C₆- bis C₂₀-Alkanolen, C₄- bis C₂₀-Alkylphenolen, ethoxilierten C₆- bis C₂₀-Alkanolen und ethoxilierten C₄- bis C₂₀-Alkylphenolen, weiterhin auf der Basis der zuvor genannten Umsetzungsprodukte der oben aufgeführten Polyether mit Phosphorsäure, Phosphorpentoxid und Phosphonsäure bzw. Schwefelsäure und Sulfonsäure. Hierbei werden die Polyether in die entsprechenden Phosphorsäuremono- oder -diester und Phosphonsäureester bzw. die Schwefelsäuremonoester und Sulfonsäureester überführt. Diese sauren Ester liegen bevorzugt in Form wasserlöslicher Salze, insbesondere als Alkalimetallsalze, vor allem Natriumsalze, und Ammoniumsalze vor, sie können jedoch auch in Form der freien Säuren eingesetzt werden.

Bevorzugte Phosphate und Phosphonate leiten sich vor allem von alkoxylierten, insbesondere ethoxylierten, Fett- und Oxoalkoholen, Alkylphenolen, Fettaminen, Fettsäuren und Harzsäuren ab, bevorzugte Sulfate und Sulfonate basieren insbesondere auf alkoxylierten, vor allem ethoxylierten, Fettalkoholen, Alkylphenolen und Aminen, auch mehrwertigen Aminen, wie Hexamethylendiamin.

Derartige anionische oberflächenaktive Additive sind bekannt und im Handel z.B. unter den Namen Nekal® (BASF SE), Tamol® (BASF SE), Crodafos® (Croda), Rhodafac® (Rhodia), Maphos® (BASF SE), Texapon® (Cognis), Empicol® (Albright & Wilson), Matexil® (ICI), Soprophor® (Rhodia) und Lutensit® (BASF SE) erhältlich.

Komponente G): Füllstoffe und Agenzien zu deren Dispergierung Als Füllstoffe werden die allgemein als Füllstoffe eingesetzten Substanzen wie Silikate, z.B. Ton, Lehm, Talk, Glimmer, Kaolin, Kieselerde, Carbonate oder Sulfate, z.B. Kreide, Dolomit, Baryt, Natriumsulfat, Oxide oder Hydroxide, z.B. Quarzmehl, Kieselsäure, Aluminium., Magnesium, Zink oder Kalziumoxide, Ruß, Carbon- oder Glasfasern, Cellulose, Textil oder Gewebeschbnitzel, gemahlene Kunststoffe

Als Agenzien zu deren Dispersion können die bereits unter Komponente F) erwähnten Dispergiermittel eingesetzt werden.

### Komponente H): Formaldehydfänger

Unter Formaldehydfänger sind alle chemischen Verbindungen jeglichen Molekulargewichts zu verstehen, die in der Regel ein freies Elektronenpaar haben, welches mit dem Formaldehyd chemisch reagiert, also den Formaldehyd chemisch, in der Regel praktisch irreversibel, bindet. Derartige freie Elektronenpaare finden sich beispielsweise auf folgenden funktionellen Gruppen organischer oder anorganischer Verbindungen: primäre, sekundäre und tertiäre Aminogruppe, Hydroxylgruppe, Sulfitgruppe, Amide, Imine, Imide.

Eine bevorzugte Gruppe der Formaldehydfänger ist die, welche chemische Verbindungen jeglichen Molekulargewichts enthält, wobei die chemischen Verbindungen mindestes ein N-Atom mit mindesten einem freien Elekronenpaar enthalten, zum Beispiel: Ammoniak, Harnstoff, Melamin, organische C₁-C₁₀-Amine, Polymere die mindestens eine Aminogruppe tragen, wie Polyamine, Polyimine, Polyharnstoffe, Poly-Lysine, Polyvinylamin, Polyethylenimin.

Eine weitere bevorzugte Gruppe der Formaldehydfänger sind schwefelhaltige Salze, wie Alkalimetallsulfit, beispielsweise Natriumsulfit; Alkalimetallthiosulfat, beispielsweise Natriumthiosulfat oder Salze organischer Schwefelverbindungen, beispielsweise Thiocarboxylate.

### Komponente I): Härter

Als Härter, insbesondere für die Aushärtung des Kondensates eignen sich alle chemischen Verbindungen jeglichen Molekulargewichts, die die Polykondensation von Aminoplastharz oder Phenolformaldehydharz bewirken oder beschleunigen und solche, welche die Reaktion von organischem Isocyanat mit mindestens zwei Isocyanatgruppen mit Wasser oder anderen Verbindungen oder Substraten (zum Beispiel Holz), welche -OH oder -NH-, -NH₂- oder =NH-Gruppen enthalten, bewirken oder beschleunigen.

Als Härter für Melamin-, Harnstoff- oder Phenol-Formaldehyd-Kondensate und deren Gemische eignen sich solche, die die Weiterkondensation katalysieren wie Säuren oder deren Salze oder wässrige Lösungen dieser Salze.

Als Säuren eignen sich anorganische Säuren wie HCl, HBr, HI, H₂SO₃, H₂SO₄, Phosphorsäure, Polyphosphorsäure, Salpetersäure, Sulfonsäuren, beispielsweise p-Toluolsulfonsäure, Methansulfonsäure, Trifluormethansulfonsäure, Nonafluorbutansulfonsäure, Carbonsäuren wie C₁- bis C₈-Carbonsäuren beispielsweise Ameisensäure, Essigsäure, Propionsäure oder deren Gemische, bevorzugt anorganische Säuren wie HCl, H₂SO₃, H₂SO₄, Phosphorsäure, Polyphosphorsäure, Salpetersäure, Sulfonsäuren wie p-Toluolsulfonsäure, Methansulfonsäure, Carbonsäuren wie C₁- bis C₈-Carbonsäuren beispielsweise Ameisensäure, Essigsäure, besonders bevorzugt anorganische Säuren wie H₂SO₄, Phosphorsäure, Salpetersäure, Sulfonsäuren wie p-Toluolsulfonsäure, Methansulfonsäure, Carbonsäuren wie Ameisensäure, Essigsäure.

Als Salze eignen sich Halogenide, Sulfite, Sulfate, Hydrogensulfate, Carbonate, Hydrogencarbonate, Nitrite, Nitrate, Sulfonate, Salze von Carbonsäuren wie Formiate, Acetate, Propionate, bevorzugt Sulfite, Carbonate, Nitrate, Sulfonate, Salze von Carbonsäuren wie Formiate, Acetate, Propionate, besonders bevorzugt Sulfite, Nitrate, Sulfonate, Salze von Carbonsäuren wie Formiate, Acetate, Propionate, von protonierten, primären, sekundären und tertiären aliphatischen Aminen, Alkanolaminen, cyclischen, aromatischen Aminen wie C₁- bis C₈-Amine,lsopropylamin, 2-Ethylhexylamin, Di-(2-ethylhexyl)amin, Diethylamin, Dipropylamin, Dibutylamin, Diisopropylamin, tert.-Butylamin, Triethylamin, Tripropylamin, Triisopropylamin, Tributylamin, Monoethanolamin, Morpholin, Piperidin, Pyridin, sowie Ammoniak, bevorzugt protonierte primäre, sekundäre, und tertiäre aliphatische Amine, Alkanolamine, cyclische Amine, cyclische aromatische Amine sowie Ammoniak, besonders bevorzugt protonierte Alkanolamine, cyclische Amine sowie Ammoniak oder deren Gemische.

Als Salze seien insbesondere genannt: Ammoniumchlorid, Ammoniumbromid, Ammoniumiodid, Ammoniumsulfat, Ammoniumsulfit, Ammoniumhydrogensulfat, Ammoniummethansulfonat, Ammonium-p-toluolsulfonat, Ammoniumtrifluormethansulfonat, Ammoniumnonafluorbutansulfonat, Ammoniumphosphat, Ammoniumnitrat, Ammoniumformiat, Ammoniumacetat, Morpholiniumchlorid, Morpholiniumbromid, Morpholiniumiodid, Morpholiniumsulfat, Morpholiniumsulfit, Morpholiniumhydrogensulfat, Morpholiniummethansulfonat, Morpholinium-p-toluolsulfonat, Morpholiniumtrifluormethansulfonat, Morpholiniumnonafluorbutansulfonat, Morpholiniumphosphat, Morpholiniumnitrat, Morpholiniumformiat, Morpholiniumacetat, Monoethanolammoniumchlorid, Monoethanolammoniumbromid, Monoethanolammoniumiodid, Monoethanolammoniumsulfat, Monoethanolammoniumsulfit, Monoethanolammoniumhydrogensulfat, Monoethanolammoniummethansulfonat, Monoethanolammonium-p-toluolsulfonat, Monoethanolammoniumtrifluormethansulfonat, Monoethanolammoniumnonafluorbutansulfonat, Monoethanolammoniumphosphat, Monoethanolammoniumnitrat, Monoethanolammoniumformiat, Monoethanolammoniumacetat oder deren Gemische.

Ganz besonders bevorzugt werden die Salze in Form ihrer wässrigen Lösungen eingesetzt. Als wässrige Lösungen werden in diesem Zusammenhang verdünnte, gesättigte, übersättigte und auch teilgefällte Lösungen sowie gesättigte Lösungen mit einem Feststoffgehalt an nicht mehr lösbarem Salz verstanden.

Phenolformaldehydharze können auch alkalisch, bevorzugt mit Carbonaten oder Hydroxiden wie Natrium- oder Kaliumcarbonat und Natrium- oder Kaliumhydroxid ausgehärtet werden.

Weitere Beispiele von Härtern für Aminoplastharze finden sich in M. Dunky, P. Niemz, Holzwerkstoffe und Leime, Springer 2002, Seiten 265 bis 269, solche Härter für Phenolformaldehydharze finden sich in M. Dunky, P. Niemz, Holzwerkstoffe und Leime, Springer 2002, Seiten 341 bis 352 und solche Härter für organische Isocyanate mit mindestens 2 Isocyanatgruppen finden sich in M. Dunky, P. Niemz, Holzwerkstoffe und Leime, Springer 2002, Seiten 385 bis 391.

### Komponente J): Fluoreszenzfarbstoffe

Fluoreszenzfarbstoffe sind dem Fachmann bekannt. Sie werden beispielsweise in der WO-A-99/40123, Seite 10, Zeile 14 bis Seite 25, Zeile 25 und in der EP-B-0 692 517, Seite 3, Zeile 7 bis Seite 6, Zeile 1, beschrieben. Geeignete Fluoreszenzfarbstoffe gehören beispielsweise zu der Klasse der Cumarin-, Perylen-, Terrylen-, Quaterrylen-, Naphthalimid-, Cyanin-, Xanthen-, Oxazin-, Anthracen-, Naphthacen-, Anthrachinon- oder Thiazin-Farbstoffe.

### Komponente K): weitere Bestandteile

Expandierte Kunststoffteilchen, vorzugsweise expandierte thermoplastische Kunststoffteilchen, werden aus expandierbaren Kunststoffteilchen, vorzugsweise expandierbaren thermoplastische Kunststoffteilchen, hergestellt. Beide basieren auf bzw. bestehen aus Polymeren, vorzugsweise thermoplastischen Polymeren, die sich verschäumen lassen. Diese sind dem Fachmann bekannt.

Gut geeignete derartige Polymere sind beispielsweise Polyketone, Polysulfone, Polyoxymethylen, PVC (hart und weich), Polycarbonate, Polyisocyanurate, Polycarbodümide, Polyacrylimide und Polymethacrylimide, Polyamide, Polyurethane, Aminoplastharze und Phenolharze, Styrolhomopolymere (im Folgenden auch als "Polystyrol" oder "Styrolpolymerisat" bezeichnet), Styrolcopolymere, C₂-C₁₀-Olefinhomopolymere, C₂-C₁₀-Olefincopolymere, Polyester oder deren Gemische, bevorzugt PVC (hart und weich), Polyurethane, Styrolhomopolymerisat, Styrolcopolymerisat oder deren Gemische, besonders bevorzugt Styrolhomopolymerisat, Styrolcopolymerisat oder deren Gemische, insbesondere Styrolhomopolymerisat, Styrolcopolymerisat oder deren Gemische.

Die oben beschriebenen bevorzugten oder besonders bevorzugten expandierbaren Styrolpolymerisaten oder expandierbaren Styrolcopolymerisate haben einen relativ geringen Gehalt an Treibmittel. Derartige Polymerisate werden auch als "treibmittelarm" bezeichnet. Ein gut geeignetes Verfahren zu Herstellung von treibmittelarmen expandierbarem Polystyrol oder expandierbarem Styrolcopolymerisat wird in US-A-5,112,875 beschrieben auf das hierin ausdrücklich Bezug genommen wird.

Wie beschrieben, können auch Styrolcopolymerisate eingesetzt werden. Vorteilhaft weisen diese Styrolcopolymerisate mindestens 50 Gew.-%, vorzugsweise mindestens 80 Gew.-% einpolymerisiertes Styrol auf. Als Comonomere kommen z. B. α-Methylstyrol, kernhalogenierte Styrole, Acrylnitril, Ester der Acryl- oder Methacrylsäure von Alkoholen mit 1 bis 8 C-Atomen, N-Vinylcarbazol, Maleinsäure(anhydrid), (Meth)acrylamide und/oder Vinylacetat in Betracht.

Vorteilhaft kann das Polystyrol und/oder Styrolcopolymerisat eine geringe Menge eines Kettenverzweigers einpolymerisiert enthalten, d.h. einer Verbindung mit mehr als einer, vorzugsweise zwei Doppelbindungen, wie Divinylbenzol, Butadien und/oder Butandioldiacrylat. Der Verzweiger wird im Allgemeinen in Mengen von 0,0005 bis
0,5 Mol-%, bezogen auf Styrol, verwendet.

Auch Mischungen verschiedener Styrol(co)polymerisate können verwendet werden.

Gut geeignete Styrolhomopolymerisate oder Styrolcopolymerisate sind glasklares Polystyrol (GPPS), Schlagzähpolystyrol (HIPS), anionisch polymerisiertes Polystyrol oder Schlagzähpoly-styrol (A-IPS), Styrol-α-Methylstyrol-copolymere, Acrylnitril-Butadien-Styrolpolymerisate (ABS), Styrol-Acrylnitril (SAN), Acrylnitril-Styrol-Acrylester (ASA), Methylacrylat-Butadien-Styrol (MBS), Methylmethacrylat-Acrylnitril-Butadien-Styrol (MABS)-Polymerisate oder Mischungen davon oder mit Polyphenylenether (PPE) eingesetzt.

Bevorzugt werden Styrolpolymerisate, Styrolcopolymerisate oder Styrolhomopolymerisate mit einem Molekulargewicht im Bereich von 70.000 bis 400.000 g/mol, besonders bevorzugt 190.000 bis 400.000 g/mol, ganz besonders bevorzugt 210.000 bis 400.000 g/mol eingesetzt.

Derartiges Polystyrol und/oder Styrolcopolymerisat kann nach allen den Fachmann bekannten Polymerisierungsverfahren hergestellt werden, siehe z. B. Ullmann's Encyclopedia, Sixth Edition, 2000 Electronic Release oder Kunststoff-Handbuch 1996, Band 4 "Polystyrol", Seiten 567 bis 598.

Bestehen die expandierten Kunststoffteilchen aus unterschiedlichen Polymertypen, also Poly-mertypen, denen unterschiedliche Monomere zugrunde liegen, beispielsweise Polystyrol und Polyethylen oder Polystyrol und Homo-Polypropylen oder Polyethylen und Homo-Polypropylen, so können diese in unterschiedlichen Gewichtsverhältnissen vorliegen, die allerdings unkritisch sind.

Die expandierten Kunststoffteilchen werden im Allgemeinen in Form von Kugeln oder Perlen mit einem mittleren Durchmesser von 0,25 bis 10 mm, bevorzugt 0,4 bis 8,5 mm, besonders bevorzugt 0,4 bis 7 mm, insbesondere im Bereich von 1,2 bis 7 mm eingesetzt und weisen vorteilhaft eine kleine Oberfläche pro Volumen auf, beispielsweise in Form eines sphärischen oder elliptischen Partikels.

Die expandierten Kunststoffteilchen sind vorteilhaft geschlossenzellig. Die Offenzelligkeit nach DIN-ISO 4590 beträgt in der Regel weniger als 30%.

Die expandierten Kunststoffteilchen weisen eine Schüttdichte, von 10 bis 150 kg/m³ auf, bevorzugt 30 bis 100 kg/m³, besonders bevorzugt 40 bis 80 kg/m³, insbesondere 50 bis 70 kg/m³. Die Schüttdichte wird üblicherweise durch Wiegen eines mit dem Schüttgut gefüllten definierten Volumens ermittelt.

Die expandierten Kunststoffteilchen haben in der Regel, wenn überhaupt, nur noch einen geringen Gehalt an Treibmittel. Der Gehalt an Treibmittel im expandierten Kunststoffteilchen liegt im Allgemeinen im Bereich von 0 bis 5,5 Gew.-%, vorzugsweise 0 bis 3 Gew.-%, bevorzugt 0 bis 2,5 Gew.-%, besonders bevorzugt 0 bis 2 Gew.-%, jeweils bezogen auf das expandierte Polystyrol oder expandierte Styrolcopolymerisat. 0 Gew.-% bedeutet hierin, dass kein Treibmittel mit den üblichen Nachweisverfahren nachgewiesen werden kann.

Diese expandierten Kunststoffteilchen können ohne oder mit, bevorzugt ohne weitere Maßnahmen zur Treibmittelverminderung und besonders bevorzugt ohne weitere Zwischenschritte zur Herstellung des lignocellulosehaltigen Stoffs weiterverwendet werden.

Üblicherweise weist das expandierbare Polystyrol oder expandierbare Styrolcopoly-merisat oder das expandierte Polystyrol oder expandierte Styrolcopolymerisat eine antistatische Beschichtung auf.

Die expandierten Kunststoffteilchen können wie folgt erhalten werden:
Kompakte expandierbare Kunststoffteilchen, üblicherweise Feststoffe die in der Regel keine Zellstruktur besitzen, welche ein ausdehnungsfähiges Medium (auch "Treibmittel" genannt) enthalten, werden durch Einwirkung von Wärme oder Druckänderung expandiert (oft auch als "Aufschäumen" bezeichnet). Hierbei dehnt sich das Treibmittel aus, die Partikel nehmen an Größe zu und Zellstrukturen entstehen.

Dieses Expandieren wird im Allgemeinen in üblichen Aufschäumvorrichtungen, oft als "Vorschäumer" bezeichnet, durchgeführt. Derartige Vorschäumer können ortsfest installiert oder aber mobil sein.

Die Expandierung kann einstufig oder mehrstufig durchgeführt werden. In der Regel werden beim einstufigen Verfahren die expandierbaren Kunststoffteilchen ohne weiteres auf die gewünschte Endgröße expandiert.

In der Regel werden beim mehrstufigen Verfahren die expandierbaren Kunststoffteilchen zunächst auf eine Zwischengröße expandiert und dann in einer oder mehreren weiteren Stufen über entsprechend viele Zwischengrößen zur gewünschten Endgröße expandiert.

Vorzugsweise wird die Expandierung einstufig durchgeführt.

Für die Herstellung von expandiertem Polystyrol und/oder expandiertem Styrolcopolymerisat werden im Allgemeinen die expandierbaren Styrolhomopolymerisate oder expandierbaren Styrolcopolymerisate in bekannter Weise durch Erhitzen auf Temperaturen oberhalb ihres Erweichungspunkts, beispielsweise mit Heißluft oder vorzugsweise Dampf und oder Druckänderung expandiert (oft auch als "aufgeschäumt" bezeichnet), wie zum Beispiel in Kunststoff Handbuch 1996, Band 4 "Polystyrol", Hanser 1996, Seiten 640 bis 673 oder US-A-5,112,875 beschrieben. Das expandierbare Polystyrol oder expandierbare Styrolcopolymerisat ist in der Regel in an sich bekannter Weise durch Suspensionspolymerisation oder mittels Extrusionsverfahren wie oben beschrieben erhältlich. Beim Expandieren dehnt sich das Treibmittel aus, die Polymerpartikel nehmen an Größe zu und Zellstrukturen entstehen.

Die Herstellung des expandierbaren Polystyrols und/oder Styrolcopolymerisats erfolgt in der Regel in an sich bekannter Weise durch Suspensionspolymerisation oder mittels Extrusionsverfahren.

Bei der Suspensionspolymerisation wird Styrol, gegebenenfalls unter Zusatz weiterer Comonomere in wässriger Suspension in Gegenwart eines üblichen Suspensionsstabilisators mittels radikalbildender Katalysatoren polymerisiert. Das Treibmittel und gegebenenfalls weitere Zusatzstoffe können dabei bei der Polymerisation mit vorgelegt werden oder im Laufe der Polymerisation oder nach beendeter Polymerisation dem Ansatz zugefügt werden. Die erhaltenen perlförmigen, mit Treibmittel imprägnierten, expandierbaren Styrolpolymerisate werden nach beendeter Polymerisation von der wässrigen Phase abgetrennt, gewaschen, getrocknet und gesiebt.

Bei dem Extrusionsverfahren wird das Treibmittel beispielsweise über einen Extruder in das Polymer eingemischt, durch eine Düsenplatte gefördert und unter Druck zu Partikeln oder Strängen granuliert.

Die so erhaltenen expandierten Kunststoffteilchen bzw. die beschichteten expandierten Kunststoffteilchen können zwischengelagert und transportiert werden.

Als Treibmittel eignen sich alle dem Fachmann bekannten Treibmittel, beispielsweise aliphatische C₃- bis C₁₀-Kohlenwasserstoffe wie Propan, n-Butan, Isobutan, n-Pentan, Isopentan, Neopentan, Cyclopentan und/oder Hexan und dessen Isomere, Alkohole, Ketone, Ester, Ether, Kohlenstoffdioxid, Wasserstoff, halogenierte Kohlenwasserstoffe oder deren Gemische, bevorzugt n-Pentan, Isopentan, Neopentan, Cyclopentan oder deren Gemisch, besonders bevorzugt handelsübliche Pentanisomerengemische aus n-Pentan und iso-Pentan.

Der Gehalt an Treibmittel im expandierbaren Kunststoffteilchen liegt im allgemeinen im Bereich von 0,01 bis 7 Gew.-%, vorzugsweise 0,01 bis 4 Gew.-%, bevorzugt 0,1 bis 4 Gew.-%, besonders bevorzugt 0,5 bis 3,5 Gew.-%, jeweils bezogen auf das treibmittelhaltige expandierbare Polystyrol oder Styrolcopolymerisat.

Die expandierten Kunststoffteilchen können beschichtet oder unbeschichtet sein.

### Beschichtung der expandierten Kunststoffteilchen

Als Beschichtungsmittel für die expandierbaren bzw. expandierten Kunststoffteilchen eignen sich alle Verbindungen, die auch als Bestandteile der expandierbaren oder expandierten Kunststoffkügelchen dienen (Verbindung des Bestandteils X) sowie Verbindungen , die eine klebrige Schicht bilden (Verbindung Y), oder deren Gemische. Bevorzugt sind alle Verbindungen Ysowie Verbindungen, die eine klebrige Schicht bilden (Verbindung Z), besonders bevorzugt alle Verbindungen Z.

Als Verbindungen Y, die eine klebrige Schicht bilden, eignen sich Polymere auf Basis von Monomeren wie vinylaromatischen Monomeren, wie α-Methylstyrol, p-Methylstyrol, Ethylstyrol, tert.- Butylstyrol, Vinylstyrol, Vinyltoluol, 1,2-Diphenylethylen, 1,1-Diphenylethylen, Alkenen, wie Ethylen oder Propylen, Dienen, wie 1,3-Butadien, 1,3-Pentadien, 1,3-Hexadien, 2,3-Dimethylbutadien, Isopren, Piperylen oder Isopren, α-β-ungesättigte Carbonsäuren, wie Acrylsäure und Methacrylsäure, deren Estern, insbesondere Alkylester, wie C₁- bis C₁₀-Alkylester der Acrylsäure, insbesondere die Butylester, vorzugsweise n-Butylacrylat, und die C₁- bis C₁₀-Alkylester der Methacrylsäure, insbesondere Methylmethacrylat (MMA), oder Carbonsäureamide, beispielsweise Acrylsäureamid und Methacrylsäureamid. Diese Polymere können gegebenenfalls 1 bis 5 Gew.-% Comonomere, wie (Meth)acrylnitril, (Meth)acrylamid, Ureido(meth)acrylat, 2-Hydroxyethyl(meth)acrylat, 3-Hydroxypropyl(meth)acrylat, Acrylamidpropansulfonsäure, Methylolacrylamid oder das Natriumsalz der Vinylsulfonsäure enthalten. Bevorzugt sind diese Polymere aus einem oder mehreren der Monomeren Styrol, Butadien, Acrylsäure, Methacrylsäure, C₁- bis C₄-Alkylacrylaten, C₁- bis C₄-Alkylmethacrylaten, Acrylsäureamid, Methacrylsäureamid und Methylolacrylsäureamid aufgebaut. Des Weiteren eignen sich insbesondere Acrylatharze, besonders bevorzugt in Form der wässrigen Polymerdispersion, sowie Homooligomere oder Homopolymere von α-β-ungesättigten Carbonsäuren oder deren Anhydriden sowie Co-Oligomere oder Co-Polymere von α-β-ungesättigten Carbonsäuren und/oder deren Anhydriden mit ethylenisch ungesättigten Co-Monomeren.

Als Verbindungen Z kommen die unter Aminoplast und Phenolformaldehyd-Kondensate definierten Verbindungen, sowie organische Isocyanate in Frage.

Als organische Isocyanate eignen sich organische Isocyanate mit mindestens zwei Isocyanatgruppen oder deren Gemische, insbesondere alle dem Fachmann, vorzugsweise die für die Herstellung von Lignocellulosewerkstoffen oder Polyurethanen bekannten, organischen Isocyanate oder deren Gemische. Derartige organische Isocyanate sowie ihre Herstellung und Anwendung sind beispielsweise in Becker/Braun, Kunststoff Handbuch, 3. neubearbeitete Auflage, Band 7 "Polyurethane", Hanser 1993, Seiten 17 bis 21, Seiten 76 bis 88 und Seiten 665 bis 671 beschrieben.

Bevorzugte organische Isocyanate sind oligomere Isocyanate mit 2 bis 10, vorzugsweise 2 bis 8 Monomer-Einheiten und im Mittel mindestens einer Isocyanatgruppe pro Monomer-Einheit oder deren Gemische, besonders bevorzugt das oligomere organische Isocyanat PMDI ("Polymeres Methylendiphenylendiisocyanat") das erhältlich ist durch Kondensation von Formaldehyd mit Anilin und Phosgenierung der bei der Kondensation entstanden Isomeren und Oligomeren (siehe zum Beispiel Becker/Braun, Kunststoff Handbuch, 3. neubearbeitete Auflage, Band 7 "Polyurethane", Hanser 1993, Seiten 18 letzter Absatz bis Seite 19, zweiter Absatz und Seite 76, fünfter Absatz), ganz besonders bevorzugt Produkte der LUPRANAT^{®}-Typenreihe der BASF SE, insbesondere LUPRANAT^{®} M 20 FB der BASF SE.

Gut geeignete Härter für organisches Isocyanat mit mindestens zwei Isocyanatgruppen, beispielsweise PMDI, können in vier Gruppen unterteilt werden: Amine, weitere Basen, Metallsalze und Organometallverbindungen, bevorzugt sind Amine. Derartige Härter sind beispielsweise in Michael Szycher, Szycher's Handbook of Polyurethanes, CRC Press, 1999, Seiten 10-1 bis 10-20 beschrieben.

Ferner geeignet sind Verbindungen, die die Reaktion von reaktiven Wasserstoffatomen, insbesondere Hydroxylgruppen, enthaltenden Verbindungen mit den organischen Isocyanaten stark beschleunigen.

Zweckmäßigerweise verwendet man als Härter basische Polyurethankatalysatoren, beispielsweise tertiäre Amine, wie Triethylamin, Tributylamin, Dimethylbenzylamin, Dicyclohexylmethylamin, Dimethylcyclohexylamin, N,N,N',N'-Tetramethyldiaminodiethylether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N',N'-Tetramethylbutandiamin, N,N,N',N'-Tetramethylhexandiamin-1,6, Pentamethyldiethylentriamin, Dimethylpiperazin, N-Dimethylaminoethylpiperidin, 1,2-Dimethylimidazol, 1-Azabicyclo-(2,2,0)-octan, 1,4-Diazabicyclo-(2,2,2)-octan(Dabco) und Alkanolaminverbindungen, wie Triethanolamin, Triisopropanolamin, N-Methyl- und N-Ethyldiethanolamin, Dimethylaminoethanol, 2-(N,N-Dimethylaminoethoxy)ethanol, N,N',N"-Tris-(dialkylaminoalkyl)hexahydrotriazine, z.B. N, N', N"-Tris-(dimethylaminopropyl)-s-hexahydrotriazin, und Triethylendiamin.

Als Metallsalze eignen sich Salze von Metallen wie Eisen(II)-chlorid, Zinkchlorid, Bleioctoat und vorzugsweise Zinnsalze wie Zinndioctoat.

Als Organometallverbindungen eignen sich Organometallsalze wie Zinndioctoat, Zinndiethylhexoat und Dibutylzinndilaurat sowie insbesondere Mischungen aus tertiären Aminen und organischen Zinnsalzen.

Als weitere Basen eignen sich Amidine, wie 2,3-Dimethyl-3,4,5,6-tetrahydropyrimidin, Tetraalkyl-ammoniumhydroxide, wie Tetramethylammoniumhydroxid, Alkalihydroxide, wie Natriumhydroxid und Alkalialkoholate, wie Natriummethylat und Kaliumisopropylat, sowie Alkalisalze von langkettigen Fettsäuren mit 10 bis 20 C-Atomen und gegebenenfalls seitenständigen OH-Gruppen.

Geeignete Polymerdispersionen sind beispielsweise durch radikalische Emulsionspolymerisation von ethylenisch ungesättigten Monomeren, wie Styrol, Acylate, Methacrylate oder deren Gemisch, wie in WO-A-00/50480 beschrieben, erhältlich, bevorzugt reine Acrylate oder Styrol-Acrylate, welche aus den Monomeren Styrol, n-Butylacrylat, Methylmetharcylat (MMA), Methacrylsäure, Acrylamid oder Methylolacrylamid, aufgebaut sind.

Die Herstellung der Polymerdispersion oder -suspension kann in an sich bekannter Weise, etwa durch Emulsions-, Suspensions-, oder Dispersionspolymerisation, bevorzugt in wässriger Phase, erfolgen. Man kann das Polymer auch durch Lösungs- oder Massepolymerisation herstellen, gegebenenfalls Zerteilen und die Polymerpartikel anschließend in Wasser in üblicher Weise dispergieren.

Das Beschichtungsmittel kann mit dem expandierbaren Kunststoffteilchen ("Variante I") oder mit dem expandierten Kunststoffteilchen in Berührung gebracht. ("Variante II"); vorzugsweise wird Variante (II) verwendet.

Der erfindungsgemäße beschichtete Kunststoffteilchen können beispielsweise dadurch hergestellt werden, dass man
a) Kunststoffteilchen, bevorzugt nicht expandierbare Kunststoffteilchen, aufschmilzt, ein oder mehreren Beschichtungsmitteln und Treibmittel in beliebiger Reihenfolge zugibt, möglichst homogen vermischt und zu Schaumstoffpartikeln aufschäumt,
b) expandierbare Kunststoffteilchen, mit ein oder mehreren Beschichtungsmitteln beschichtet und zu Schaumstoffpartikeln aufschäumt oder
c) expandierbare Kunststoffteilchen während oder nach dem Vorschäumen mit ein oder mehreren Beschichtungsmitteln beschichtet.

Weiterhin kann das in Berührung bringen mit den üblichen Verfahren geschehen, beispielsweise durch Besprühen, Tauchen, Benetzen oder Auftrommeln der expandierbaren bzw. expandierten Kunststoffteilchen mit dem Beschichtungsmittel bei einer Temperatur von 0 bis150°C, bevorzugt 10 bis 120°C, besonders bevorzugt 15 bis 110°C und einem Druck von 0,01 bis 10 bar, bevorzugt 0,1 bis 5 bar, besonders bevorzugt bei Normaldruck (Atmosphärendruck); bevorzugt wird das Beschichtungsmittel im sogenannten Vorschäumer unter den zuvor genannten Bedingungen zugesetzt.

### Komponente L): Wasser

Wasser, zugesetzt als flüssiges Wasser Die Herstellung von lignocellulosehaltigen Werkstoffen (Holzwerkstoffen) aus partikelförmigen lignocellulosebasierten Materialien läßt sich wie folgt durchführen:
Man kann die erfindungsgemäßen Holzwerkstoffe dadurch herstellen, dass man das Gemisch der Komponenten A bis L unter erhöhter Temperatur und unter erhöhtem Druck verpresst. Insbesondere kann man die nach einer der in dieser Erfindung beschriebenen Vorgehensweisen I) bis IV) erhaltenen lignocellulosehaltigen Materialen, die die Mischungen mit Salzen von N-substituierten Carbamidsäuren enthalten, nach einem möglichen Vortrocknungsschritt zur Reduzierung der Feuchte - wie es beispielsweise bei der Herstellung von Faserplatten üblich ist - bei Temperaturen von 5 bis 300°C, bevorzugt 10 bis 280°C, besonders bevorzugt 15 bis 250°C gegebenfalls unter erhöhtem möglicherweise variierendem Druck von 1,1 bar bis 100 bar, bevorzugt 1,2 bar bis 50 bar, besonders bevorzugt 1,5 bar bis 20 bar für 10 Sekunden bis 14 Tage, bevorzugt 15 Sekunden bis 7 Tage, besonders bevorzugt 20 Sekunden bis 7 Tage, insbesondere 30 Sekunden bis 1 Stunde zu einem verarbeitbarem selbsttragenden Material aushärten lassen. Dies kann ohne oder mit Zuhilfenahme geeigneter Formen und Apparaturen, wie beispielsweise einer kontinuierlichen oder diskontinuierlichen Pressapparatur geschenen. Gegebenenfalls kann vor einer eventuellen Weiterverarbeitung des Holzwerkstoffs ein Trocknungsschritt folgen, bei dem die im Holzwerkstoff enthaltene Feuchte reduziert wird.
Die neuen Mischungen eignen sich als Bindemittel für lignocellulosehaltige Werkstoffe, Kunststoff, Metall oder Komposite, zur Imprägnierung bzw. als Beschichtung von Holzwerkstoffen, Papier, Textil, Keramik, Leder, Metall oder Kunststoff, zur Herstellung von Melamin-, Harnstoff-, Phenol-Formaldehyd- oder Komposit-Schäumen, als Dispergiermittel und als Beschichtungsadditiv, insbesondere als Bindemittel zur Herstellung von lignocellulosehaltigen Werkstoffen.

### Beispiele

Herstellung von Holzwerkstoffplatten enthaltend Salze der N-substituierten Carbamidsäuren (Carbamate)

### Beispiel 1

Zusammensetzung der als Leimflotte verwendeten Mischung mit 1 Teil Carbamat (bezogen auf den Festharzgehalt)
0,6 Gew.-% Metaxylolammoniummonocarbamat (MXMC)

| | |
|---|---|
| 1,6 Gew.-% | Ammoniumnitrat |
| 56,4 Gew.-% | Kaurit® Leim KL 350 (berechnet als Festharz) |
| 41,4 Gew.-% | Wasser |

### Beispiel 2

Zusammensetzung der als Leimflotte verwendeten Mischung mit 2 Teilen Carbamat (bezogen auf den Festharzgehalt)

| | |
|---|---|
| 1,2 Gew.-% | Metaxylolammoniummonocarbamat (MXMC) |
| 1,6 Gew.-% | Ammoniumnitrat |
| 56,4 Gew.-% | Kaurit® Leim KL 350 (berechnet als Festharz) |
| 40,8 Gew.-% | Wasser |

### Beispiel 3

Zusammensetzung der als Leimflotte verwendeten Mischung mit 1 Teil gemischtem Carbamat (bezogen auf den Festharzgehalt)

| | |
|---|---|
| 0,3 Gew.-% | Metaxylolammoniummonocarbamat (MXMC) |
| 0,3 Gew.-% | Hexamethylenammoniummonocarbamat (HMMC) |
| 1,6 Gew.-% | Ammoniumnitrat |
| 56,4 Gew.-% | Kaurit® Leim KL 350 (berechnet als Festharz) |
| 41,4 Gew.-% | Wasser |

### Vergleichsbeispiel 1

Zusammensetzung der Leimflotte ohne Additivierung

| | |
|---|---|
| 1,6 Gew.-% | Ammoniumnitrat |
| 56,4 Gew.-% | Kaurit® Leim KL 350 (berechnet als Festharz) |
| 42 Gew.-% | Wasser |

### Herstellung der Mischungen

Die Mischungen wurden durch Einbringen der entsprechenden Anteile des Additivs als als 10 Gew.-%ige wässrige Lösung des Salzes der N-substituierten Carbamidsäure (Carbamate) in 100 Teile 67 Gew.-%ige Lösung von Kaurit®-Leim KL 350 der BASF SE hergestellt. Dieser Mischung wurden ebenfalls 4 Teile einer 52 Gew.-% igen Ammoniumnitratlösung sowie entsprechende Teile Wasser zugegeben um die als Leimflotte eingesetzte Mischungen (s. Beispiele 1-3) zu erhalten.

### Herstellung der lignocellulosehaltigen Materialien

88,5 g oben hergestellten Mischung werden mit 1,01 kg Holzspänen (Fichtespäne der Spänetypen B/C als 40/60-Mischung) vermischt, so dass eine Beleimung von 9% atro (atro = Festharz auf trockenes Holz) resultiert. Die beleimten Holzspäne werden in einer Heißpresse bei 210°C und über 200 sec zu einer 16 mm dicken Holzspanplatte mit einer Dichte von 650 kg/m³ gepresst, wobei der Pressdruck nach 75 Sekunden von anfänglich 40 bar auf 20 bar und nach weiteren 75 Sekunden auf 10 bar reduziert und dort 50 Sekunden gehalten wird. Nach Abkühlung auf Raumtemperatur werden die so erhaltenen Holzspanplatten auf ihre mechanischen Eigenschaften und Formaldehydemission untersucht. Die Ergebnisse sind in nachfolgender Tabelle zusammengestellt:

**Tabelle: Ergebnisse der mechanischen Prüfungen und Formaldehydemissionen der aus den jeweiligen Mischungen hergestellten Spanplatten**

| | Vergleich 1: Ohne Carbamat | Beispiel 1: 0,6 Gew.-% MXMC | Beispiel 2: 1,2 Gew.-% MXMC | Beispiel 3: 0,3 Gew.-% MXMC + 0,3 Gew.-% HMMC |
|---|---|---|---|---|
| Wasseraufnahme nach 24h [%] | 95,4 | 99,3 | 100,6 | 99,0 |
| Querzugfestigkeit [N/mm²] | 0,73 | 0,76 | 0,75 | 0,81 |
| Gasanalyse [mg/m²h] | 5,03 | 3,58 | 4,24 | 3,93 |
| Flaschenmethode [mg/kg atro] | 5,85 | 4,81 | 5,43 | 5,1 |

| | | | | |
|---|---|---|---|---|
| MXMC = Metaxylolammoniummonocarbamat HMMC = Hexamethylenammoniummonocarbamat | | | | |

### Analytik und Versuchsergebnisse

Die mechanischen Tests zur Querzugfestigkeit V20 und die Wasseraufnahme wurden an Probenkörpern mit Dimensionen von 50 x 50 x 16mm durchgeführt.
Die Formaldehydemissionen wurden per Gasanalyse nach EN 717 - 2 und per Flaschenmethode analog EN 717 - 3 bestimmt.

## Patentansprüche

1. Lignocellulosehaltige Materialen, **dadurch gekennzeichnet, dass** sie
a) 30 bis 99,9999 Gew.-%, bevorzugt 40 bis 99,999 Gew.-%, besonders bevorzugt 50 bis 99,99 Gew.-% lignocellulosebasiertes Material (Komponente A),
b) 0,0001 bis 10 Gew.-%, bevorzugt 0,001 bis 8 Gew.-%, besonders bevorzugt 0,01 bis 4 Gew.-% Salze von N-substituierten Carbamidsäuren (Komponente B) und
c) 0 bis 40 Gew.-%, bevorzugt 0 bis 30 Gew.-%, besonders bevorzugt 0 bis 15 Gew.-% eines Bindemittels(Komponente C),
d) 0 bis 20 Gew.-%, bevorzugt 0 bis 15 Gew.-%, besonders bevorzugt 0 bis 10 Gew.-% mikrofibrillierte Cellulose (Komponente D),
e) 0 bis 20 Gew.-%, bevorzugt 0 bis 15 Gew.-%, besonders bevorzugt 0 bis 10 Gew.-% Hydrophobierungsmittel (Komponente E),
f) 0 bis 20 Gew.-%, bevorzugt 0 bis 15 Gew.-%, besonders bevorzugt 0 bis 10 Gew.-% Effektstoffe sowie Agenzien zu deren Dispergierung (Komponente F),
g) 0 bis 20 Gew.-%, bevorzugt 0 bis 15 Gew.-%, besonders bevorzugt 0 bis 10 Gew.-% Füllstoffe sowie Agenzien zu deren Dispergierung (Komponente G),
h) 0 bis 20 Gew.-%, bevorzugt 0 bis 15 Gew.-%, besonders bevorzugt 0 bis 10 Gew.-% Formaldehydfänger (Komponente H),
i) 0 bis 20 Gew.-%, bevorzugt 0 bis 15 Gew.-%, besonders bevorzugt 0 bis 10 Gew.-% Härter (Komponente I),
j) 0 bis 5 Gew.-%, bevorzugt 0 bis 2 Gew.-%, besonders bevorzugt 0 bis 1 Gew.-% Fluoreszenzfarbstoff (Komponente J),
k) 0 bis 20 Gew.-%, bevorzugt 0 bis 15 Gew.-%, besonders bevorzugt 0 bis 10 Gew.-% weitere Bestandteile (Komponente K) und
l) 0 bis 30 Gew.%, bevorzugt 0 bis 20 Gew.-%, besonders bevorzugt 0 bis 10 Gew.-% Wasser (Komponente L)
enthalten.

2. Lignocellulosehaltige Materialen nach Anspruch 1, **dadurch gekennzeichnet, dass** sie
a. 80 bis 99,9999 Gew.-%, bevorzugt 90 bis 99,999 Gew.-%, besonders bevorzugt 95 bis 99,99 Gew.-% lignocellulosebasiertes Material in Form von Massivholz (Komponente A),
b. 0,0001 bis 20 Gew.-%, bevorzugt 0,001 bis 10 Gew.-%, besonders bevorzugt 0,01 bis 5 Gew.-% Salze von N-substituierten Carbamidsäuren (Komponente B) und
c. 0 bis 10 Gew.-%, bevorzugt 0 bis 5 Gew.-%, eines Bindemittels(Komponente C),
d. 0 bis 5 Gew.-%, bevorzugt 0 bis 2 Gew.-% mikrofibrillierte Cellulose (Komponente D),
e. 0 bis 5 Gew.-%, bevorzugt 0 bis 2 Gew.-% Hydrophobierungsmittel (Komponente E),
f. 0 bis 5 Gew.-%, bevorzugt 0 bis 2 Gew.-% Effektstoffe sowie Agenzien zu deren Dispergierung (Komponente F),
g. 0 bis 5 Gew.-%, bevorzugt 0 bis 2 Gew.-% Füllstoffe sowie Agenzien zu deren Dispergierung (Komponente G),
h. 0 bis 5 Gew.-%, bevorzugt 0 bis 2 Gew.-% Formaldehydfänger (Komponente H),
i. 0 bis 5 Gew.-%, bevorzugt 0 bis 2 Gew.-% Härter (Komponente I),
j. 0 bis 1 Gew.-%, bevorzugt 0 bis 0,5 Gew.-% Fluoreszenzfarbstoff (Komponente J),
k. 0 bis 5 Gew.-%, bevorzugt 0 bis 2 Gew.-% weitere Bestandteile (Komponente K) und
l. 0 bis 20 Gew.-%, bevorzugt 0 bis15 Gew.-% Wasser (Komponente L).
enthalten.

3. Lignocellulosehaltige Materialen nach Anspruch 1, hergestellt unter Verwendung von 0,0001 bis 10 Gew.-%, bevorzugt 0,001 bis 8 Gew.-%, besonders bevorzugt 0,01 bis 4 Gew.-% Salze von N-substituierten Carbamidsäuren (Komponente B).

4. Lignocellulosehaltige Materialen , enthaltend die Komponenten A und C bis L nach Anspruch 1, hergestellt unter Verwendung von 0,0001 bis 10 Gew.-%, bevorzugt 0,001 bis 8 Gew.-%, besonders bevorzugt 0,01 bis 4 Gew.-% Salze von N-substituierten Carbamidsäuren (Komponente B).

5. Lignocellulosehaltige Materialen enthaltend die Komponenten A und C bis L nach Anspruch 1, **dadurch gekennzeichnet, dass** sie 0,0001 bis 8 Gew.-%, bevorzugt 0,0001 bis 5 Gew.-%, besonders bevorzugt 0,0001 bis 3 Gew.-% Salze von N-substituierten Carbamidsäuren (Komponente B) enthalten.

6. Verfahren zur Herstellung von lignocellulosehaltige Materialen nach einem der Ansprüche 1 bis 4, **dadurch gekennzeichnet, dass** man 0,0001 bis 10 Gew.-%, bevorzugt 0,001 bis 8 Gew.-%, besonders bevorzugt 0,01 bis 4 Gew.-% Salze von N-substituierten Carbamidsäuren (Komponente B) einsetzt.

7. Verfahren zur Herstellung von Holzwerkstoffen nach einem der Ansprüche 1 bis 4, **dadurch gekennzeichnet, dass** man das Gemisch der Komponenten A bis L unter erhöhter Temperatur und unter erhöhtem Druck verpresst.

8. Mischungen, **dadurch gekennzeichnet, dass** sie
a) 0,0025 bis 25 Gew.-%, bevorzugt 0,025 bis 20 Gew.-%, besonders bevorzugt 0,25 bis 10 Gew.-% Salzen von N-substituierten Carbamidsäuren (Komponente B), und
b) 99,9975 bis 20 Gew.-%, bevorzugt 99,975 bis 40 Gew.-%, besonders bevorzugt 99,75 bis 50 Gew.-% Melamin-Formaldehyd-, Harnstoff-Formaldehyd- oder Phenol-Formaldehyd-Kondensate oder deren Mischungen (Komponente C), und
c) 0 bis 50 Gew.-%, bevorzugt 0 bis 37,5 Gew.-%, besonders bevorzugt 0 bis 25 Gew.-% mikrofibrillierte Cellulose (Komponente D),
d) 0 bis 50 Gew.-%, bevorzugt 0 bis 37,5 Gew.-%, besonders bevorzugt 0 bis 25 Gew.-% Hydrophobierungsmittel (Komponente E),
e) 0 bis 50 Gew.-%, bevorzugt 0 bis 37,5 Gew.-%, besonders bevorzugt 0 bis 25 Gew.-% Effektstoffe sowie Agenzien zu deren Dispergierung (Komponente F),
f) 0 bis 50 Gew.-%, bevorzugt 0 bis 37,5 Gew.-%, besonders bevorzugt 0 bis 25 Gew.-% Füllstoffe sowie Agenzien zu deren Dispergierung (Komponente G),
g) 0 bis 50 Gew.-%, bevorzugt 0 bis 37,5 Gew.-%, besonders bevorzugt 0 bis 25 Gew.-% Formaldehydfänger (Komponente H),
h) 0 bis 50 Gew.-%, bevorzugt 0 bis 37,5 Gew.-%, besonders bevorzugt 0 bis 25 Gew.-% Härter (Komponente I),
i) 0 bis 12,5 Gew.-%, bevorzugt 0 bis 5 Gew.-%, besonders bevorzugt 0 bis 2,5 Gew.-% Fluoreszenzfarbstoff (Komponente J),
j) 0 bis 50 Gew.-%, bevorzugt 0 bis 37,5 Gew.-%, besonders bevorzugt 0 bis 25 Gew.-% weitere Bestandteile (Komponente K) und
k) 0 bis 75 Gew.-%, bevorzugt 0 bis 50 Gew.-%, besonders bevorzugt 0 bis 25 Gew.-% Wasser (Komponente L)
enthalten.

9. Verwendung der Mischungen nach Anspruch 8 als Bindemittel.

10. Verwendung der Mischungen nach Anspruch 8 zur Herstellung von Holzwerkstoffen.

11. Verwendung der Mischungen nach Anspruch 8 zur Imprägnierung bzw. als Beschichtung von Holzwerkstoffen, Papier, Textil, Keramik, Leder, Metall oder Kunststoff, zur Herstellung von Melamin-, Harnstoff-, Phenol-Formaldehyd- oder Komposit-Schäumen, als Dispergiermittel und als Beschichtungsadditiv.
